# EUROPEAN PATENT APPLICATION

(11) **EP 4 478 828 A1**
(43) Date of publication of application: **18.12.2024**
(21) Application number: 22925325.7
(22) Date of filing: 10.02.2022
(51) Int. Cl.: H04W 76/27

(54) **PATH SWITCH METHOD AND APPARATUS**

(71) Applicant: FUJITSU LIMITED, Kawasaki-shi, Kanagawa 211-8588 (JP)
(72) Inventor: LI, Guorong, Beijing 100022 (CN); WANG, Xin, Beijing 100022 (CN)
(74) Representative: Haseltine Lake Kempner LLP
(86) International application number: PCT/CN2022/075826
(87) International publication number: WO 2023/150963

(57) **Abstract**

A path switch method and apparatus. The method is applicable to a second terminal equipment and includes: receiving an RRC reconfiguration complete (RRCReconfigurationComplete) message from a first terminal equipment; initiating an RRC connection setup procedure or an RRC resume procedure; and transmitting indication information to the first terminal equipment when the RRC connection setup procedure or the RRC resume procedure fails or succeeds.

## Description

### Technical Field

This disclosure relates to the field of communication technologies.

### Background

In Release 17, sidelink relay (SL relay) is under study, which includes a UE-to-network relay scenario.

Wherein, NR Uu is used on a Uu link of a relay UE, and an NR sidelink is assumed to be used on a PC5 interface between a remote UE and a relay UE. In the UE-to-network relay scenario, the relay UE is also referred to as a UE-to-network relay UE.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

For service continuity of an L2 UE-to-network relay, a remote terminal equipment may switch from communicating directly with a network device (which may be referred to as a direct path) to communicating with the network device via a relay terminal equipment (which may be referred to as an indirect path), which may be referred to as direct to indirect path switch.

In a direct to indirect path switch process, a target relay UE may possibly be in an RRC idle (RRC_idle) state or an RRC inactive (RRC_inactive) state or an RRC connected (RRC_CONNECTED) state.

At present, there is a working assumption that a network device (such as a gNB) may select a relay UE in any RRC state, that is, a relay UE in an RRC idle (RRC_idle) state or an RRC inactive (RRC_inactive) state or an RRC connected (RRC_CONNECTED) state may be indicated as a target relay UE. That is, after receiving a path switch command (RRCReconfiguration), a remote UE establishes a PC5 link with the relay UE and transmits a switch complete (RRCReconfigurationComplete) message via the relay UE, which will trigger the relay UE to enter an RRC CONNECTED (RRC_CONNECTED) mode.

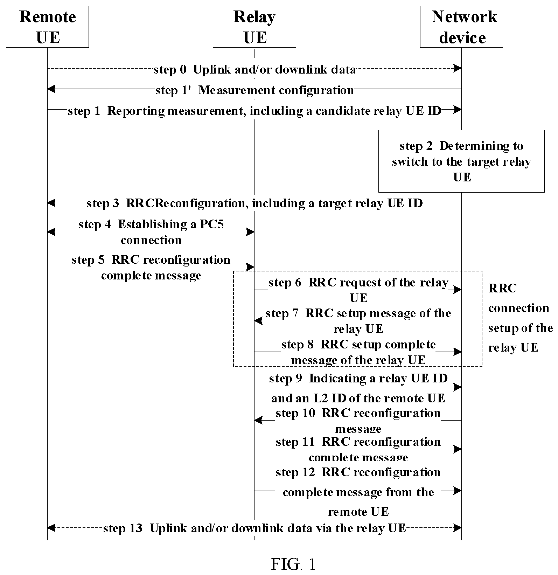

FIG. 1 is a schematic diagram of the direct to indirect path switch process of the remote UE based on the working assumption.

As shown in FIG. 1, the process includes:
step 0: performing transmission of uplink and/or downlink (UL/DL) data between the remote UE and the network device via a Uu interface;
step 1': transmitting measurement configuration by the network device to the remote UE;
step 1: reporting one or more candidate relay UEs and legacy Uu measurement by the remote UE after measuring and/or discovering a candidate UE-to-network relay UE,
   wherein the report may include at least a relay UE ID, a serving cell ID of the relay UE and SL measurement information, wherein the SL measurement information may be SL-RSRP of the candidate relay UE, and if the SL-RSRP is unavailable, SD-RSRP will be used;
step 2: determining by the network device to switch the remote UE to the target relay UE;
step 3: transmitting an RRCReconfiguration message by the network device to the remote UE, wherein contents of the message may include at least a relay UE ID, PC5 RLC configuration of relay services and related end-to-end radio bearers, and the remote UE stops user plane (UP) and control plane (CP) transmission after receiving the RRCReconfiguration message of the network device;
step 4: establishing a PC5 connection by the remote UE with the target relay UE;
step 5: transmitting an RRCReconfigurationComplete message by the remote UE to the target relay UE, wherein if the relay UE is in the RRC_Idle state, the message triggers the target relay UE to initiate an RRC connection establishment procedure of its own;
   or, if the target relay UE is in the RRC_inactive state, the message triggers the target relay UE to initiate an RRC resume procedure (not shown);
steps 6-8: successfully establishing or resuming RRC connection of its own by the target relay UE;
step 9: transmitting a sidelink UE information message by the target relay UE to the network device, the message carrying an L2 ID of the target relay UE of its own and an L2 ID of the remote UE establishing PC5 connection with the target relay UE;
steps 10-11: transmitting an RRCReconfiguration message by the network device, wherein the message may include at least a local ID and L2 ID of the remote UE, RLC channel configuration with Uu and PC5 interfaces used for relay and bearer mapping configuration, and after completing reconfiguration, the target relay UE transmits an RRC configuration complete message to the network device;
step 12: forwarding the RRC configuration complete message transmitted by the remote UE in step 5 by the target relay UE to the network device; and
step 13: switching a data path between the remote UE and the network device from a direct path to an indirect path.

For the path switch of the remote UE, a new timer like T304 is introduced, and if the timer expires, the remote UE will deem that the path switch fails. Following methods are available for conditions for the remote UE to stop the new timer like T304:
option 1: when RRCReconfigurationComplete is successfully transmitted, that is, when lower layer acknowledgement is received from the target relay UE;
option 2: when successfully establishing a PC5 unicast link with the target relay UE;
option 3: when an RRCReconfigurationCompleteSidelink message is received from the target relay UE; and
option 4: when an explicit indication is received from the target relay UE.

It was found by the inventors that based on existing techniques, if the relay UE in the RRC idle (RRC_Idle) or RRC inactive (RRC_Inactive) state receives the RRC configuration complete message transmitted by the remote relay UE in step 5 in FIG. 1, it will initiate the RRC connection setup or RRC resume procedure of its own. If the relay UE does not successfully set up or resume RRC connection, due to, for example, that the relay UE performs cell reselection in the RRC connection setup or RRC resume procedure or the relay UE may possibly be rejected by the network device for connection setup or resume, how the remote relay UE finds such a problem and takes subsequent measures is a problem needing to be solved.

In order to solve at least one of the above problems, embodiments of this disclosure provide a path switch method and apparatus.

According to a first aspect of the embodiments of this disclosure, there is provided a path switch apparatus, applicable to a second terminal equipment, the apparatus including: a first receiving unit configured to receive an RRC reconfiguration complete (RRCReconfigurationComplete) message of a first terminal equipment; a first initiating unit configured to initiate an RRC connection setup procedure or an RRC resume procedure; and a first transmitting unit configured to transmit indication information to the first terminal equipment when the RRC connection setup procedure or the RRC resume procedure fails or succeeds.

According to a second aspect of the embodiments of this disclosure, there is provided a path switch apparatus, applicable to a first terminal equipment, the apparatus including: a third transmitting unit configured to transmit an RRC reconfiguration complete message of the first terminal equipment to a second terminal equipment; and a second receiving unit configured to receive indication information from the second terminal equipment, the indication information being used to indicate that an RRC connection setup procedure or an RRC resume procedure of the second terminal equipment fails or succeeds.

According to a third aspect of the embodiments of this disclosure, there is provided a path switch apparatus, applicable to a second terminal equipment, the apparatus including: a fourth transmitting unit configured to, when the second terminal equipment performs an RRC connection setup procedure or an RRC resume procedure, indicate to a network device that the RRC connection setup procedure or the RRC resume procedure is used for path switch of a first terminal equipment.

According to a fourth aspect of the embodiments of this disclosure, there is provided a path switch apparatus, applicable to a network device, the apparatus including: a third receiving unit configured to receive third indication information from a second terminal equipment, the third indication information indicating that an RRC connection setup procedure or an RRC resume procedure of the second terminal equipment is used for path switch of a first terminal equipment.

According to a fifth aspect of the embodiments of this disclosure, there is provided an indication apparatus in a sidelink, applicable to a second terminal equipment, the apparatus including: a fourth receiving unit configured to receive an RRC connection setup request message or an RRC resume request message or an RRC reestablishment request message from a first terminal equipment; a second initiating unit configured to initiate an RRC connection setup procedure or an RRC resume procedure or an RRC reestablishment procedure of the second terminal equipment; and a fifth transmitting unit configured to transmit indication information to the first terminal equipment in a case where the RRC connection setup procedure or the RRC resume procedure or the RRC reestablishment procedure fails.

According to a sixth aspect of the embodiments of this disclosure, there is provided an indication apparatus in a sidelink, applicable to a first terminal equipment, the apparatus including: a sixth transmitting unit configured to transmit an RRC connection setup request message or an RRC resume request message or an RRC reestablishment request message to a second terminal equipment; and a fifth receiving unit configured to receive indication information from the second terminal equipment, the indication information being used to indicate that an RRC connection setup procedure or an RRC resume procedure or an RRC reestablishment procedure of the second terminal equipment fails.

According to a seventh aspect of the embodiments of this disclosure, there is provided a terminal equipment, including the apparatus as described in the embodiments of the first aspect of this disclosure.

According to an eighth aspect of the embodiments of this disclosure, there is provided a terminal equipment, including the apparatus as described in the embodiments of the second aspect of this disclosure.

According to a ninth aspect of the embodiments of this disclosure, there is provided a terminal equipment, including the apparatus as described in the embodiments of the third aspect of this disclosure.

According to a tenth aspect of the embodiments of this disclosure, there is provided a network device, including the apparatus as described in the embodiments of the fourth aspect of this disclosure.

According to an eleventh aspect of the embodiments of this disclosure, there is provided a terminal equipment, including the apparatus as described in the embodiments of the fifth aspect of this disclosure.

According to a twelfth aspect of the embodiments of this disclosure, there is provided a terminal equipment, including the apparatus as described in the embodiments of the sixth aspect of this disclosure.

According to a thirteenth aspect of the embodiments of this disclosure, there is provided a communication system, including the terminal equipment as described in the embodiments of the seventh aspect of this disclosure and/or the terminal equipment as described in the embodiments of the eighth aspect of this disclosure and a network device.

According to a fourteenth aspect of the embodiments of this disclosure, there is provided a communication system, including the terminal equipment as described in the embodiments of the ninth aspect of this disclosure and/or the network device as described in the embodiments of the tenth aspect of this disclosure.

According to a fifteenth aspect of the embodiments of this disclosure, there is provided a communication system, including the terminal equipment as described in the embodiments of the eleventh aspect of this disclosure and/or the terminal equipment as described in the embodiments of the twelfth aspect of this disclosure and a network device.

According to a sixteenth aspect of the embodiments of this disclosure, there is provided a path switch method, applicable to a second terminal equipment, the method including: receiving an RRC reconfiguration complete (RRCReconfigurationComplete) message of a first terminal equipment; initiating an RRC connection setup procedure or an RRC resume procedure; and transmitting indication information to the first terminal equipment when the RRC connection setup procedure or the RRC resume procedure fails or succeeds.

According to a seventeenth aspect of the embodiments of this disclosure, there is provided a path switch method, applicable to a network device, the method including: transmitting configuration of a beam of a non-serving cell to a terminal equipment; and transmitting a reference signal used for radio link failure detection to the terminal equipment; and/or, transmitting a reference signal of a TCI state with which a serving cell is associated to the terminal equipment.

According to an eighteenth aspect of the embodiments of this disclosure, there is provided a path switch method, applicable to a second terminal equipment, the method including: when the second terminal equipment performs an RRC connection setup procedure or an RRC resume procedure, indicating to a network device that the RRC connection setup procedure or the RRC resume procedure is used for path switch of a first terminal equipment.

According to a nineteenth aspect of the embodiments of this disclosure, there is provided a path switch method, applicable to a network device, the method including: receiving third indication information from a second terminal equipment, the third indication information indicating that an RRC connection setup procedure or an RRC resume procedure of the second terminal equipment is used for path switch of a first terminal equipment.

According to a twentieth aspect of the embodiments of this disclosure, there is provided an indication method in a sidelink, applicable to a second terminal equipment, the method including: receiving an RRC connection setup request message or an RRC resume request message or an RRC reestablishment request message from a first terminal equipment; initiating an RRC connection setup procedure or an RRC resume procedure or an RRC reestablishment procedure of the second terminal equipment; and transmitting indication information to the first terminal equipment in a case where the RRC connection setup procedure or the RRC resume procedure or the RRC reestablishment procedure fails.

According to a twenty-first aspect of the embodiments of this disclosure, there is provided an indication method in a sidelink, applicable to a first terminal equipment, the method including: transmitting an RRC connection setup request message or an RRC resume request message or an RRC reestablishment request message to a second terminal equipment; and receiving indication information from the second terminal equipment, the indication information being used to indicate that an RRC connection setup procedure or an RRC resume procedure or an RRC reestablishment procedure of the second terminal equipment fails.

According to a twenty-second aspect of the embodiments of this disclosure, there is provided a computer readable program, which, when executed in a path switch apparatus or a terminal equipment, will cause the path switch apparatus or the terminal equipment to carry out the path switch method described in the sixteenth or seventeenth or eighteenth or twentieth or twenty-first aspect of the embodiments of this disclosure.

According to a twenty-third aspect of the embodiments of this disclosure, there is provided a computer readable medium, including a computer readable program code, which will cause a path switch apparatus or a terminal equipment to carry out the path switch method described in the sixteenth or seventeenth or eighteenth or twentieth or twenty-first aspect of the embodiments of this disclosure.

According to a twenty-fourth aspect of the embodiments of this disclosure, there is provided a computer readable program, which, when executed in a path switch apparatus or a network device, will cause the path switch apparatus or the network device to carry out the path switch method described in the nineteenth aspect of the embodiments of this disclosure.

According to a twenty-fifth aspect of the embodiments of this disclosure, there is provided a computer readable medium, including a computer readable program code, which will cause a path switch apparatus or a network device to carry out the path switch method described in the nineteenth aspect of the embodiments of this disclosure.

An advantage of the embodiments of this disclosure exists in that in a case where the RRC connection setup procedure or RRC resume procedure fails or succeeds, the relay UE transmits indication information to the remote UE. Therefore, in a case where the relay UE in the RRC idle state or the RRC inactive state fails or is rejected by the network device in performing the RRC connection setup or RRC resume procedure, the remote UE may be notified or aware of the case, which is conducive to the remote UE in resuming connection with the network in other manners, and reduces service interruption time of path switch of the remote UE.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiments of this disclosure may be combined with elements and features depicted in one or more additional drawings or embodiments. Moreover, in the drawings, like reference numerals designate corresponding parts throughout the several views and may be used to designate like or similar parts in more than one embodiments.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of a direct to indirect path switch process of a remote UE based on a working assumption;
FIG. 2 is a schematic diagram of scenario 1 of UE-to-network relay;
FIG. 3 is a schematic diagram of scenario 2 of UE-to-network relay;
FIG. 4 is a schematic diagram of scenario 3 of UE-to-network relay;
FIG. 5 is a schematic diagram of the path switch method of embodiment 1 of this disclosure;
FIG. 6 is another schematic diagram of the path switch method of embodiment 1 of this disclosure;
FIG. 7 is a schematic diagram of the path switch method of embodiment 2 of this disclosure;
FIG. 8 is a schematic diagram of the path switch method of embodiment 3 of this disclosure;
FIG. 9 is a schematic diagram of one implementation of the path switch method of embodiment 3 of this disclosure;
FIG. 10 is a schematic diagram of another implementation of the path switch method of embodiment 3 of this disclosure;
FIG. 11 is a schematic diagram of the path switch method of embodiment 4 of this disclosure;
FIG. 12 is another schematic diagram of the path switch method of embodiment 4 of this disclosure;
FIG. 13 is a schematic diagram of the indication method in a sidelink of embodiment 5 of this disclosure;
FIG. 14 is another schematic diagram of the indication method in a sidelink of embodiment 5 of this disclosure;
FIG. 15 is a further schematic diagram of the indication method in a sidelink of embodiment 5 of this disclosure;
FIG. 16 is a schematic diagram of the path switch apparatus of embodiment 6 of this disclosure;
FIG. 17 is a schematic diagram of the path switch apparatus of embodiment 7 of this disclosure;
FIG. 18 is a schematic diagram of the path switch apparatus of embodiment 8 of this disclosure;
FIG. 19 is another schematic diagram of the path switch apparatus of embodiment 8 of this disclosure;
FIG. 20 is a schematic diagram of the indication apparatus in a sidelink of embodiment 9 of this disclosure;
FIG. 21 is another schematic diagram of the indication apparatus in a sidelink of embodiment 9 of this disclosure;
FIG. 22 is a block diagram of a systematic structure of the terminal equipment of embodiment 10 of this disclosure; and
FIG. 23 is a block diagram of a systematic structure of the network device of embodiment 11 of this disclosure

### Detailed Description

These and further aspects and features of this disclosure will be apparent with reference to the following description and attached drawings. In the description and drawings, particular embodiments of this disclosure have been disclosed in detail as being indicative of some of the ways in which the principles of this disclosure may be employed, but it is understood that this disclosure is not limited correspondingly in scope. Rather, this disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. For example, a 5G base station gNB may include a gNB CU and one or more gNB DUs, wherein the CU/DU is a logical node of the gNB having a part of functions of the gNB. And the term "cell" may refer to a base station and/or its coverage area, depending on a context of the term. A gNB-DU supports one or more cells, and a cell is supported by one gNB-DU.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, all of "when... ", "in a case where... ", "for a case where..." and "if..." denote being based on one or some conditions or states, and furthermore, all of these expressions are interchangeable.

Scenarios of the embodiments of this disclosure shall be described below by way of examples; however, this disclosure is not limited thereto.

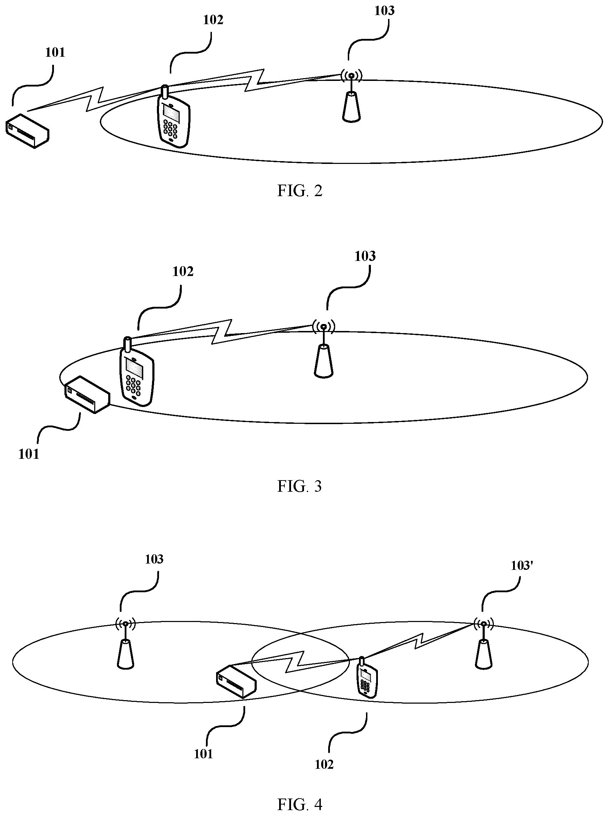

FIG. 2 is a schematic diagram of scenario 1 of UE-to-network relay, FIG. 3 is a schematic diagram of scenario 2 of UE-to-network relay, and FIG. 4 is a schematic diagram of scenario 3 of UE-to-network relay
As shown in Figure 2, in scenario 1, a first terminal equipment 101 is out of coverage (OOC) of a network device 103, and a second terminal equipment 102 is in coverage (IC) of the network device 103.

As shown in Figure 3, in scenario 2, the first terminal equipment 101 is in coverage (IC) of the network device 103, and the second terminal equipment 102 is in coverage (IC) of the network device 103.

As shown in Figure 4, in scenario 3, the first terminal equipment 101 is in coverage of network device 103, and the second terminal equipment 102 is in coverage of another network device 103 '.

In the embodiments of this disclosure, the first terminal equipment is a remote terminal equipment (remote UE), and the second terminal equipment is a relay terminal equipment (relay UE).

In the embodiments of this disclosure, the relay UE may be a UE-to-network relay UE. In addition, the relay UE in the embodiments of this disclosure may be a target relay UE, that is, a target relay of a remote UE after being switched to an indirect path.

Various implementations of the embodiments of this disclosure shall be described below with reference to the accompanying drawings. These implementations are illustrative only, and are not intended to limit this disclosure.

### Embodiment 1

The embodiments of this disclosure provide a path switch method. The method is applicable to a second terminal equipment, such as the second terminal equipment in FIGs. 2-4.

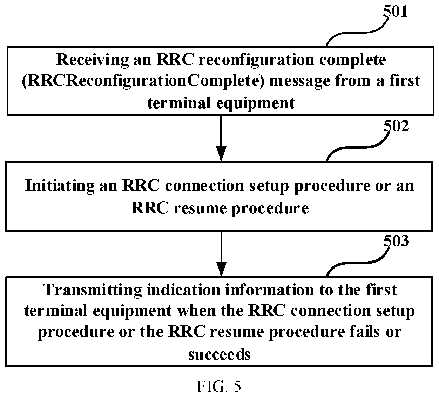

FIG. 5 is a schematic diagram of the path switch method of embodiment 1 of this disclosure. As shown in FIG. 5, the method includes:
step 501: receiving an RRC reconfiguration complete (RRCReconfigurationComplete) message from a first terminal equipment;
step 502: initiating an RRC connection setup procedure or an RRC resume procedure; and
step 503: transmitting indication information to the first terminal equipment when the RRC connection setup procedure or the RRC resume procedure fails or succeeds.

In the embodiments of this disclosure, the first terminal equipment is a remote UE, and the second terminal equipment is a relay UE.

In the embodiments of this disclosure, the path switch refers to direct-to-indirect path switch.

In the embodiments of this disclosure, the relay UE may be a UE-to-network relay UE. In addition, the relay UE in the embodiments of this disclosure may be a target relay UE, that is, a target relay of a remote UE after being switched to an indirect path.

Hence, in a case where the RRC connection setup procedure or RRC resume procedure fails or succeeds, the relay UE transmits the indication information to the remote UE. Therefore, in a case where the relay UE in the RRC idle state or the RRC inactive state fails or is rejected by the network device in performing the RRC connection setup or RRC resume procedure, the remote UE may be notified or aware of the case, which is conducive to the remote UE in resuming connection with the network in other manners, and reduces service interruption time of path switch of the remote UE.

In the embodiments of this disclosure, for example, reference may be made to step 5 in FIG. 1 for steps 501 and 502, that is, the remote UE (first terminal equipment) transmits the RRCReconfigurationComplete message to the target relay UE (second terminal equipment). If the relay UE is in the RRC_Idle state, the message triggers the target relay UE to initiate the RRC connection setup procedure of its own; or, if the target relay UE is in the RRC_Inactive state, the message triggers the target relay UE to initiate the RRC resume procedure.

Additionally, before step 501, the method may also include other steps, such as one or more steps in FIG. 1 prior to step 5.

After step 502, the relay UE (second terminal equipment) initiates RRC connection setup procedure or RRC resume procedure of its own, such as executing one or more steps of steps 6-8 in FIG. 1.

That is, after the relay UE (second terminal equipment) initiates RRC connection setup procedure or RRC resume procedure of its own, the RRC connection setup procedure or RRC resume procedure may succeed, or may fail.

In the embodiments of this disclosure, the failure may include that a message transmitted by the relay UE (second terminal equipment) in the RRC connection setup or RRC resume procedure is not received by the network device, or a message transmitted by the network device in the RRC connection setup or RRC resume procedure is not received by the relay UE, may include performing cell selection or cell reselection in the RRC connection setup procedure or RRC resume procedure, may also include being rejected or released by the network device, and may also include other cases that prevent the relay UE from entering the RRC_connected state, etc.

In the embodiments of this disclosure, the success may include that the relay UE (second terminal equipment) transmits an RRC connection setup complete message or an RRC resume complete message, and/or receives an acknowledgment from the network device, and/or enters the RRC_connected state, etc.

Failure or success of the RRC connection setup procedure or RRC resume procedure of the relay UE (second terminal equipment) shall be exemplarily described below.
For example, the relay UE (second terminal equipment) in the RRC_Idle state initiates the RRC connection setup procedure of its own, and transmits an RRC connection setup request message to the network device, but the message is not correctly received by the network device, and the RRC connection setup of the relay UE fails;
for example, the relay UE (second terminal equipment) in the RRC_Idle state initiates the RRC connection setup procedure of its own, and transmits an RRC connection setup request message to the network device, the network device transmits an RRC connection setup message to the relay UE, but the RRC connection setup message is not correctly received by the relay UE, and the RRC connection setup of the relay UE fails;
for example, the relay UE (second terminal equipment) in the RRC_Idle state initiates RRC connection setup procedure of its own, transmits an RRC connection setup request message to the network device, and the network device transmits an RRC connection setup message to the relay UE, and the RRC connection setup of the relay UE succeeds; however, the RRC connection setup complete message transmitted by the relay UE to the network device is not correctly received by the network device, and the network device may possibly transmit an RRC Release message or an RRC Release message with suspend configuration (Suspend Configuration) to release the relay UE;
for example, the relay UE (second terminal equipment) in the RRC_Idle state initiates the RRC connection setup procedure of its own, and in the RRC connection setup procedure, the relay UE performs a cell reselection procedure (for example, it may possibly reselect to another cell or a cell under another base station), and the relay UE enters the RRC_Idle state, and the RRC connection setup fails;
for example, the relay UE (second terminal equipment) in the RRC_Idle state initiates the RRC connection setup procedure of its own and transmits the RRC connection setup request message to the network device, but the network device rejects the request, for example, the network device transmits an RRC Reject message to the relay UE;
for example, the relay UE (second terminal equipment) in the RRC_Idle state initiates the RRC connection setup procedure of its own, transmits an RRC connection setup request message to the network device, and the network device transmits an RRC connection setup message to the relay UE, and if the RRC connection setup of the relay UE succeeds, it successfully transmits an RRC connection setup complete message to the network device;
for example, the relay UE (second terminal equipment) in the RRC active state initiates the RRC resume procedure of its own, but the message is not correctly received by the network device, and the RRC resume of the relay UE fails;
for example, the relay UE (second terminal equipment) in the RRC_Inactive state initiates the RRC connection resume procedure of its own, transmits an RRC resume request message to the network device, and the network device transmits an RRC resume or RRC connection setup message to the relay UE, but the RRC resume message or RRC connection setup message is not correctly received by the relay UE, and the RRC resume of the relay UE fails;
for example, the relay UE (second terminal equipment) in the RRC _Inactive state initiates its own RRC connection resume procedure, transmits an RRC resume request message to the network device, and the network device transmits an RRC resume or RRC connection setup message to the relay UE, and the RRC resume or connection setup of the relay UE succeeds, but the RRC resume complete message or the RRC connection setup complete message transmitted by it to the network device is not correctly received by the network device, and the network device may possibly transmit an RRC Release message or an RRC Release message with suspend configuration to release the relay UE;
for example, the relay UE (second terminal equipment) in the RRC _Inactive state initiates the RRC connection resume procedure of its own, and in the RRC connection resume procedure, the relay UE performs a cell selection procedure or a cell reselection procedure (for example, it may possibly reselect to another cell or a cell under another network device), and the relay UE enters the RRC_Idle state, and the RRC resume fails;
for example, the relay UE (second terminal equipment) in the RRC _Inactive state initiates the RRC resume procedure of its own and transmits an RRC resume request message to the network device, but the network device rejects the request; for example, the network device transmits an RRC Reject message to the relay UE, or the network device releases the relay UE, for example, the network device transmits an RRC Release message or an RRC Release message with suspend configuration to the relay UE;
for example, the relay UE (second terminal equipment) in the RRC _Inactive state initiates the RRC resume procedure of its own, and transmits an RRC resume request message to the network device; the network device transmits an RRC resume message or RRC connection setup message to the relay UE, and the RRC resume or connection setup of the relay UE succeeds, and the relay UE successfully transmits an RRC resume complete message or RRC connection setup complete message to the network device.

In step 503, in the case where the RRC connection setup procedure or RRC resume procedure fails or succeeds, the second terminal equipment (relay UE) transmits the indication information to the first terminal equipment (remote UE).

The indication information is used to indicate that the RRC connection setup procedure or RRC resume procedure of the second terminal equipment (relay UE) fails or succeeds.

In one implementation, the indication information is first indication information, that is, in step 503, when the RRC connection setup procedure or RRC resume procedure of the second terminal equipment fails, the second terminal equipment transmits the first indication information to the first terminal equipment, the first indication information being used to indicate that the RRC connection setup procedure or RRC resume procedure of the second terminal equipment fails.

In this case, the second terminal equipment (relay UE) may not take whether the first terminal equipment (remote UE) has successfully completed path switch into account, such as whether a first timer, such as a new T304 timer, has been stopped.

In addition, when the first terminal equipment (remote UE) receives the first indication information, it may trigger an RRC connection reestablishment procedure, or a PC5 unicast link release procedure, or a relay selection or reselection procedure, or a path switch failure procedure, or a reconfiguration with sync failure procedure, etc.

In the embodiments of this disclosure, the first indication information may be a PC5-RRC message or PC5-S signaling.

For example, the PC5-RRC message is a PC5-RRC notification message, and indicates a connection failure or connection rejection, or release of a PC5 unicast link. For example, the connection failure or connection rejection includes at least one of the following: failure of the RRC connection setup procedure of the relay UE, failure of the RRC resume procedure, access failure, or access rejection, or instructing the first terminal equipment (remote UE) to perform relay selection or reselection, or instructing the first terminal equipment (remote UE) to initiate an RRC connection reestablishment procedure or a path switch failure procedure or a synchronization reconfiguration failure procedure. Moreover, a cause value or an indication type may be included in the PC5-RRC message to indicate the above connection failure or connection rejection, and it may also indicate releasing a PC5 unicast link.

For example, the PC5-S signaling indicates releasing a PC5 unicast link, for example, the PC5-S signaling is a disconnect request message.

In another implementation, the first terminal equipment (remote UE) stops the first timer, and, for example, a new condition similar to T304 timer is related to whether the RRC connection setup procedure or the RRC resume procedure of the relay UE succeeds.
For example, corresponding to option 1 above, in step 503, the second terminal equipment transmits lower layer acknowledgement to the first terminal equipment after successfully executing the random access procedure or RRC connection setup procedure or RRC resume procedure from the second terminal equipment to the network device. For example, the lower layer is an RLC layer, and the lower layer acknowledgement is acknowledgement of the RLC layer; or, the lower layer is, for example, an MAC layer, and the lower layer acknowledgement is HARQ feedback of the MAC layer (such as ACK);
for another example, corresponding to option 2 above, in step 503, after the second terminal equipment successfully executes a random access procedure or an RRC connection setup procedure or an RRC resume procedure from the second terminal equipment to the network device, the second terminal equipment transmits a message related to PC5 unicast link setup to the first terminal equipment, such as a direct communication accept message, or a discovery message, etc.

In this case, when an access stratum (AS) of the second terminal equipment successfully executes the random access procedure or the RRC connection setup procedure or the RRC resume procedure from the second terminal equipment to the network device, it notifies a proximity-based service (ProSe) layer of the second terminal equipment.

In this case, during the operation of the new timer like T304, the first terminal equipment may wait for the direct communication accept message or discovery message, etc., transmitted by the second terminal equipment. For example, the access stratum (AS) of the first terminal equipment may notify its ProSe layer of a value of the new timer like T304.

For a further example, corresponding to option 3 above, in step 503, the second terminal equipment transmits an RRC reconfiguration complete sidelink (RRCReconfigurationCompleteSidelink) message to the first terminal equipment after successfully executing the random access procedure or RRC connection setup procedure or RRC resume procedure from the second terminal equipment to the network device.

The RRC reconfiguration complete sidelink (RRCReconfigurationCompleteSidelink) message is transmitted, for example, after the first terminal equipment (remote UE) and the second terminal equipment (relay UE) establish PC5 connection (e.g. PC5-RRC connection).

For still another example, corresponding to option 4 above, in step 503, the second terminal equipment transmits second indication information to the first terminal equipment after successfully executing the random access procedure or RRC connection setup procedure or RRC resume procedure from the second terminal equipment to the network device.

In the embodiments of this disclosure, the second indication information may be explicit indication information,
The second indication information is, for example, a PC5-RRC message or PC5-S signaling.

For example, the PC5-RRC message is a PC5-RRC notification message. For example, the message has a specific indication type or cause value to indicate that the second terminal equipment is successfully executing the random access procedure or the RRC connection setup procedure or the RRC resume procedure from the second terminal equipment to the network device. For example, the indication type or cause value may be successful connection, successful random access procedure, successful RRC connection setup procedure, successful RRC resume procedure, of the relay UE, or that the relay device enters the connected state.

In the above other implementation, that the second terminal equipment successfully executes the RRC connection setup procedure may include at least one of the following situations that: an RRC setup message is received; a timer T300 is stopped; an RRC setup complete message is submitted to the lower layer for transmission; and a lower layer acknowledgment of the RRC setup complete message from the network device is received.

That the second terminal equipment successfully executes the RRC resume procedure may include at least one of the following situations that: an RRC resume message is received; an RRC setup message is received; a timer T319 is stopped; an RRC setup complete message or an RRC resume complete message is submitted to the lower layer for transmission; and a lower layer acknowledgment of the RRC setup complete message or RRC resume complete message from the network device is received.

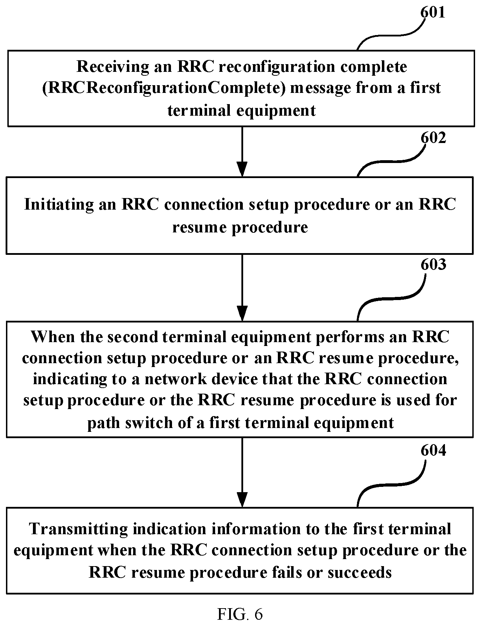

FIG. 6 is another schematic diagram of the path switch method of embodiment 1 of this disclosure. As shown in FIG. 6, the method includes:
step 601: receiving an RRC reconfiguration complete (RRCReconfigurationComplete) message from a first terminal equipment;
step 602: initiating an RRC connection setup procedure or an RRC resume procedure;
step 603: when the second terminal equipment performs an RRC connection setup procedure or an RRC resume procedure, indicating to a network device that the RRC connection setup procedure or the RRC resume procedure is used for path switch of a first terminal equipment; and
step 604: transmitting indication information to the first terminal equipment when the RRC connection setup procedure or the RRC resume procedure fails or succeeds.

In the embodiments of this disclosure, steps 601, 602 and 604 may be identical to steps 501-503, which shall not be repeated herein any further.

In step 603, when the second terminal equipment executes the RRC connection setup procedure or RRC resume procedure, it indicates to the network device that the RRC connection setup procedure or RRC resume procedure is used for path switch of the first terminal equipment, which may prevent the network device from rejecting the RRC connection setup procedure or RRC resume procedure.

In step 603, for example, the second terminal equipment transmits an RRC connection request message or RRC resume request message to the network device, a cause value included in the RRC connection request message or RRC resume request message indicating the path switch for the first terminal equipment.

It can be seen from the above embodiment that in a case where the RRC connection setup procedure or RRC resume procedure fails or succeeds, the relay UE transmits indication information to the remote UE. Therefore, in a case where the relay UE in the RRC idle state or the RRC inactive state fails or is rejected by the network device in performing the RRC connection setup or RRC resume procedure, the remote UE may be notified or aware of the case, which is conducive to the remote UE in resuming connection with the network in other manners, and reduces service interruption time of path switch of the remote UE.

### Embodiment 2

The embodiments of this disclosure provides a path switch method. The method is applicable to a first terminal equipment, and corresponds to the path switch method applicable to a second terminal equipment as described in embodiment 1, and identical contents shall not be repeated herein any further.

In the embodiments of this disclosure, the first terminal equipment is a remote UE, and the second terminal equipment is a relay UE.

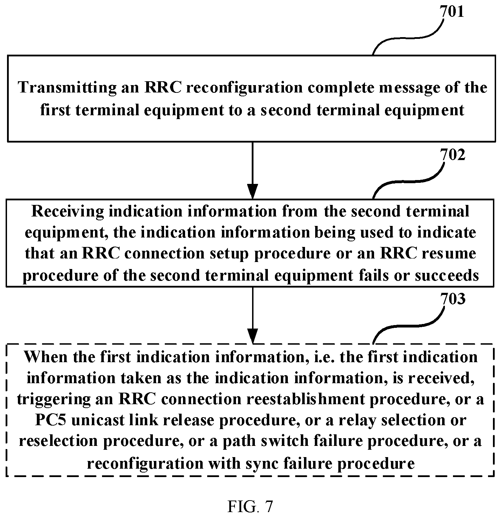

FIG. 7 is a schematic diagram of the path switch method of embodiment 2 of this disclosure. As shown in FIG. 7, the method includes:
step 701: transmitting an RRC reconfiguration complete message of the first terminal equipment to a second terminal equipment; and
step 702: receiving indication information from the second terminal equipment, the indication information being used to indicate that an RRC connection setup procedure or an RRC resume procedure of the second terminal equipment fails or succeeds.

For example, the indication information is first indication information, that is, in step 702, the first indication information is received from the second terminal equipment, the first indication information being used to notify that the RRC connection setup procedure or RRC resume procedure of the second terminal equipment fails.

In the embodiments of this disclosure, the first indication information may be a PC5-RRC message or PC5-S signaling.

For example, the PC5-RRC message is a PC5-RRC notification message, and indicates a connection failure or connection rejection, or release of a PC5 unicast link. For example, the connection failure or connection rejection includes at least one of the following: failure of the RRC connection setup procedure of the relay UE, failure of the RRC resume procedure, access failure, or access rejection, or instructing the first terminal equipment (remote UE) to perform relay selection or reselection, or instructing the first terminal equipment (remote UE) to initiate an RRC connection reestablishment procedure or a path switch failure procedure or a synchronization reconfiguration failure procedure. Moreover, a cause value or an indication type may be included in the PC5-RRC message to indicate the above connection failure or connection rejection, and indicate releasing a PC5 unicast link.

For example, the PC5-S signaling indicates releasing a PC5 unicast link, for example, the PC5-S signaling is a disconnect request message.

As shown in FIG. 7, in a case where the RRC connection setup procedure or RRC resume procedure of the second terminal equipment fails, the method may further include:
step 703: when the first indication information, i.e. the first indication information taken as the indication information, is received, triggering an RRC connection reestablishment procedure, or a PC5 unicast link release procedure, or a relay selection or reselection procedure, or a path switch failure procedure, or a reconfiguration with sync failure procedure.

In the embodiments of this disclosure, for the case where the PC5 unicast link release procedure is triggered upon receiving the first indication information, an access stratum (AS) of the first terminal equipment notifies a ProSe layer to release a PC5 unicast link.

In another implementation, the first terminal equipment (remote UE) stops a first timer, for example, conditions for a new timer like T304 are related to whether the RRC connection setup procedure or the RRC resume procedure of the relay UE is successful.

For example, corresponding to option 1 above, in step 702, a lower layer acknowledgement is received from the second terminal equipment, and a path switch procedure of the first terminal equipment is ended.

The lower layer is, for example, an RLC layer, and the lower layer acknowledgement is acknowledgement of the RLC layer; or, the lower layer is, for example, an MAC layer, and the lower layer acknowledgement is HARQ feedback of the MAC layer (such as ACK).

For example, corresponding to option 2 above, in step 702, a message related to PC5 unicast link setup is received from the second terminal equipment, and the path switch procedure of the first terminal equipment is ended. For example, the first terminal equipment stops the first timer.

For example, corresponding to option 3 above, in step 702, the RRC reconfiguration complete sidelink (RRCReconfigurationCompleteSidelink) message is received from the second terminal equipment, and the path switch procedure of the first terminal equipment is ended. For example, the first terminal equipment stops the first timer.

For example, corresponding to option 4 above, in step 702, second indication information is received from the second terminal equipment, and the path switch procedure of the first terminal equipment is ended. For example, the first terminal equipment stops the first timer.

The second indication information is, for example, a PC5-RRC message or PC5-S signaling.

For example, the PC5-RRC message is a PC5-RRC notification message. For example, the message has a specific indication type or cause value to indicate that the second terminal equipment is successfully executing the random access procedure or the RRC connection setup procedure or the RRC resume procedure from the second terminal equipment to the network device. For example, the indication type or cause value may be successful connection, successful random access procedure, successful RRC connection setup procedure, successful RRC resume procedure, of the relay UE, or that the relay device enters the connected state.

In the above other implementation, the second terminal equipment (relay UE) transmits an acknowledgement or message when the RRC connection setup is successful or the RRC resume is successful, but the acknowledgement or message may not indicate to the first terminal equipment (remote UE) that a procedure is successful, that is, the first terminal equipment (remote UE) may not be aware that the second terminal equipment (relay UE) has executed these procedures.

In the embodiments of this disclosure, reference may be made to relevant contents in embodiment 1 for specific contents related to the first terminal equipment, which shall not be repeated herein any further.

It can be seen from the above embodiment that in a case where the RRC connection setup procedure or RRC resume procedure fails or succeeds, the relay UE transmits indication information to the remote UE. Therefore, in a case where the relay UE in the RRC idle state or the RRC inactive state fails or is rejected by the network device in performing the RRC connection setup or RRC resume procedure, the remote UE may be notified or aware of the case, which is conducive to the remote UE in resuming connection with the network in other manners, and reduces service interruption time of path switch of the remote UE.

### Embodiment 3

The embodiments of this disclosure provides a path switch method. The method is applicable to a first terminal equipment, a second terminal equipment and a network device, and corresponds to the path switch method applicable to a second terminal equipment as described in embodiment 1 and the path switch method applicable to a first terminal equipment as described in embodiment 2, and identical contents shall not be repeated herein any further.

In the embodiments of this disclosure, the first terminal equipment is a remote UE, and the second terminal equipment is a relay UE.

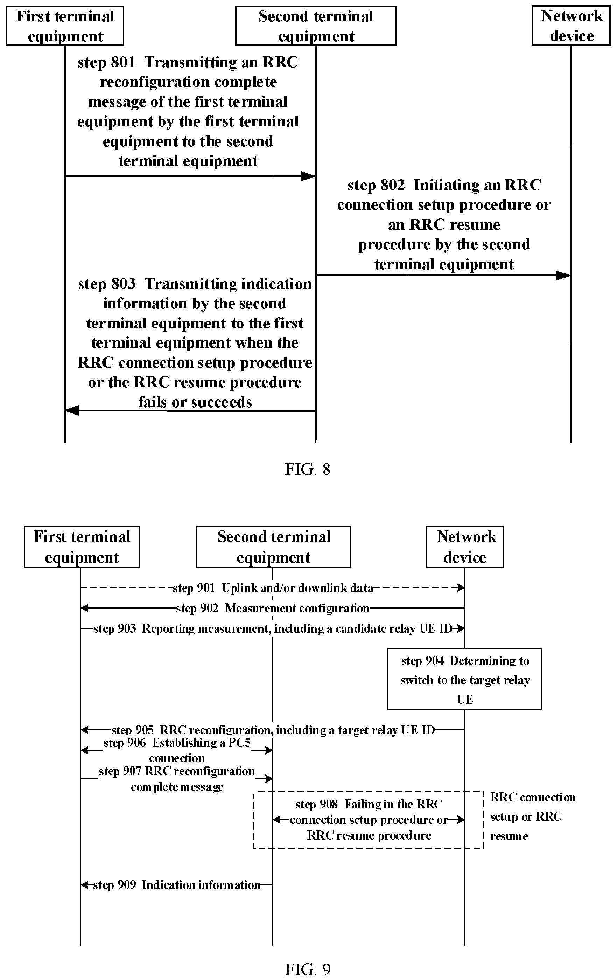

FIG. 8 is a schematic diagram of the path switch method of embodiment 3 of this disclosure. As shown in FIG. 8, the method includes:
step 801: transmitting an RRC reconfiguration complete message of the first terminal equipment by the first terminal equipment to the second terminal equipment;
step 802: initiating an RRC connection setup procedure or an RRC resume procedure by the second terminal equipment; and
step 803: transmitting indication information by the second terminal equipment to the first terminal equipment when the RRC connection setup procedure or the RRC resume procedure fails or succeeds.

FIG. 9 is a schematic diagram of one implementation of the path switch method of embodiment 3 of this disclosure. As shown in FIG. 9, the method includes:
step 901: performing transmission of uplink and/or downlink (UL/DL) data between the first terminal equipment (remote UE) and network device via a Uu interface;
step 902: transmitting measurement configuration by the network device to the first terminal equipment;
step 903: reporting one or more candidate relay UEs and legacy Uu measurement by the first terminal equipment after measuring and/or discovering a candidate UE-to-network relay UE;
wherein the report may include at least a relay UE ID, a serving cell ID of the relay UE and SL measurement information, wherein the SL measurement information may be SL-RSRP of the candidate relay UE, and if the SL-RSRP is unavailable, SD-RSRP will be used;
step 904: determining by the network device to switch the first terminal equipment to the second terminal equipment (target relay UE);
step 905: transmitting an RRCReconfiguration message by the network device to the first terminal equipment, wherein contents of the message may include at least a relay UE ID, PC5 RLC configuration of relay services and related end-to-end radio bearers, and the remote UE stops user plane (UP) and control plane (CP) transmission after receiving the RRCReconfiguration message of the network device;
step 906: establishing a PC5 connection by the first terminal equipment with the second terminal equipment;
step 907: transmitting an RRCReconfigurationComplete message by the first terminal equipment to the second terminal equipment, wherein the message triggers the target relay UE to initiate an RRC connection setup procedure of its own, or, if the target relay UE is in the RRC _Inactive state, the message triggers the target relay UE to initiate an RRC connection resume procedure;
step 908: failing in the RRC connection setup procedure or RRC resume procedure of the second terminal equipment; and
step 909: transmitting indication information by the second terminal equipment to the first terminal equipment.

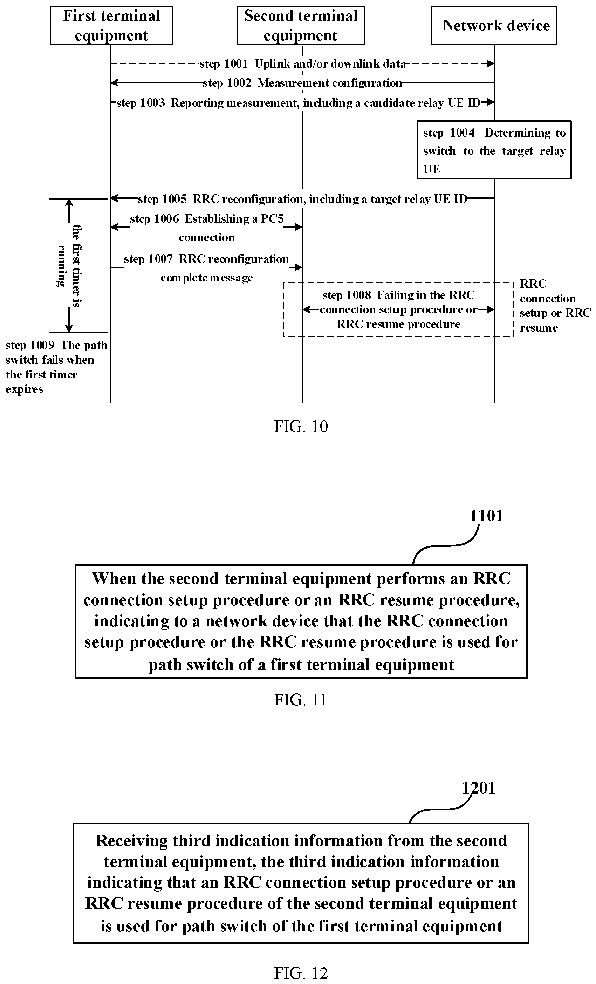

FIG. 10 is a schematic diagram of another implementation of the path switch method of embodiment 3 of this disclosure. As shown in FIG. 10, the method includes:
step 1001: performing transmission of uplink and/or downlink (UL/DL) data between the first terminal equipment (remote UE) and network device via a Uu interface;
step 1002: transmitting measurement configuration by the network device to the first terminal equipment;
step 1003: reporting one or more candidate relay UEs and legacy Uu measurement by the first terminal equipment after measuring and/or discovering a candidate UE-to-network relay UE;
wherein the report may include at least a relay UE ID, a serving cell ID of the relay UE and SL measurement information, wherein the SL measurement information may be SL-RSRP of the candidate relay UE, and if the SL-RSRP is unavailable, SD-RSRP will be used;
step 1004: determining by the network device to switch the first terminal equipment to the second terminal equipment (target relay UE);
step 1005: transmitting an RRCReconfiguration message by the network device to the first terminal equipment, wherein contents of the message may include at least a relay UE ID, PC5 RLC configuration of relay services and related end-to-end radio bearers, and the remote UE stops user plane (UP) and control plane (CP) transmission after receiving the RRCReconfiguration message of the network device; at this time, a first timer is started, such as a new timer like T304
step 1006: establishing a PC5 connection by the first terminal equipment with the second terminal equipment;
step 1007: transmitting an RRCReconfigurationComplete message by the first terminal equipment to the second terminal equipment, wherein the message triggers the target relay UE to initiate an RRC connection setup procedure of its own, or, if the target relay UE is in the RRC _Inactive state, the message triggers the target relay UE to initiate an RRC connection resume procedure;
step 1008: failing in the RRC connection setup procedure or RRC resume procedure of the second terminal equipment; and
step 1009: the first terminal equipment considers that the path switch fails when the first timer expires.

In the embodiments of this disclosure, reference may be made to the contents in embodiments 1 and 2 for specific implementations of the steps in FIGs. 8-10, which shall not be repeated herein any further.

It can be seen from the above embodiment that in a case where the RRC connection setup procedure or RRC resume procedure fails or succeeds, the relay UE transmits indication information to the remote UE. Therefore, in a case where the relay UE in the RRC idle state or the RRC inactive state fails or is rejected by the network device in performing the RRC connection setup or RRC resume procedure, the remote UE may be notified or aware of the case, which is conducive to the remote UE in resuming connection with the network in other manners, and reduces service interruption time of path switch of the remote UE.

### Embodiment 4

The embodiments of this disclosure provides a path switch method. The method is applicable to a second terminal equipment and a network device, such as the second terminal equipment 102 and the network device 103 in FIGs. 2 and 3, or the second terminal equipment 102 and the network device 103' in FIG. 4.

In the embodiments of this disclosure, the first terminal equipment is a remote UE, and the second terminal equipment is a relay UE.

FIG. 11 is a schematic diagram of the path switch method of embodiment 4 of this disclosure. As shown in FIG. 11, for the second terminal equipment, the method includes:
step 1101: when the second terminal equipment performs an RRC connection setup procedure or an RRC resume procedure, indicating to a network device that the RRC connection setup procedure or the RRC resume procedure is used for path switch of a first terminal equipment.

In step 1101, for example, the second terminal equipment transmits an RRC connection request message or an RRC resume request message to the network device, a cause value included in the RRC connection request message or the RRC resume request message indicating path switch used for the first terminal equipment.

FIG. 12 is another schematic diagram of the path switch method of embodiment 4 of this disclosure. As shown in FIG. 12, for the network device, the method includes:
step 1201: receiving third indication information from the second terminal equipment, the third indication information indicating that an RRC connection setup procedure or an RRC resume procedure of the second terminal equipment is used for path switch of the first terminal equipment.

In step 1201, for example, the RRC connection request message or RRC resume request message is received from the second terminal equipment, a cause value included in the RRC connection request message or RRC resume request message indicating path switch used for the first terminal equipment.

After receiving the third indication information from the second terminal equipment, the network device may not reject the RRC connection setup procedure or RRC resume procedure of the second terminal equipment.

In the embodiments of this disclosure, when the second terminal equipment receives, for example, via default configuration (such as SL-RLC0 configuration or SL-RLC1 configuration), the RRC reconfiguration complete message transmitted by the first terminal equipment, it may parse the message to learn that the message transmitted by the second terminal equipment is used for path switch; or, the second terminal equipment may indicate that the second terminal equipment is performing path switch or has completed path switch or a cause value (for example, the cause value is path switch, and may be used as a cause value in the RRC connection setup request or RRC resume request of the second terminal equipment) to the second terminal equipment via a PC5-RRC message.

It can be seen from the above embodiment that when the second terminal equipment is performing the RRC connection setup procedure or RRC resume procedure, it indicates that the RRC connection setup or RRC resume procedure is used for path switch of the first terminal equipment, which may prevent the network device from rejecting the RRC connection setup procedure or RRC resume procedure.

### Embodiment 5

The embodiments of this disclosure provides an indication method in a sidelink. The method is applicable to at least one of a first terminal equipment and a second terminal equipment, such as the first terminal equipment 101 and the second terminal equipment 102 in FIGs. 2-4.

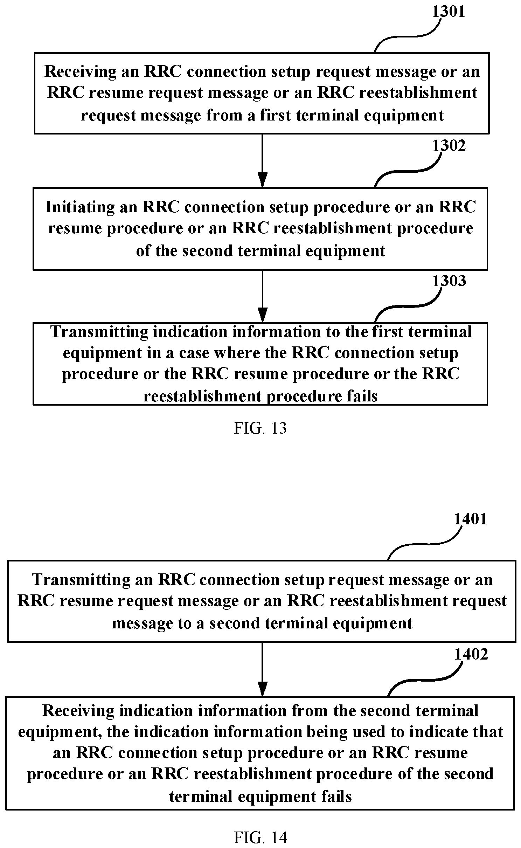

FIG. 13 is a schematic diagram of the indication method in a sidelink of embodiment 5 of this disclosure. As shown in FIG. 13, for the second terminal equipment, the method includes:
step 1301: receiving an RRC connection setup request message or an RRC resume request message or an RRC reestablishment request message from a first terminal equipment;
step 1302: initiating an RRC connection setup procedure or an RRC resume procedure or an RRC reestablishment procedure of the second terminal equipment; and
step 1303: transmitting indication information to the first terminal equipment in a case where the RRC connection setup procedure or the RRC resume procedure or the RRC reestablishment procedure fails.

In the embodiments of this disclosure, the indication information is used to indicate that the RRC connection setup procedure or RRC resume procedure or RRC reestablishment procedure of the second terminal equipment fails.

In step 1301, for example, the RRC connection setup request message or the RRC resume request message or the RRC reestablishment request message is received by using specified PC5 RLC channel configuration, or on a specified PC5 RLC channel, or by using SRB0 default or specified configuration or SL-RLC0 configuration, or by using SRB1 default or specified configuration or SL-RLC1 configuration.

In the embodiments of this disclosure, the first indication information may be a PC5-RRC message or PC5-S signaling.

For example, the PC5-RRC message is a PC5-RRC notification message, and indicates a connection failure or connection rejection, or release of a PC5 unicast link. For example, the connection failure or connection rejection includes at least one of the following: failure of the RRC connection setup procedure of the relay UE, failure of the RRC resume procedure, access failure, or access rejection, or instructing the first terminal equipment (remote UE) to perform relay selection or reselection, or instructing the first terminal equipment (remote UE) to initiate an RRC connection reestablishment procedure or a path switch failure procedure or a synchronization reconfiguration failure procedure. Moreover, a cause value or an indication type may be included in the PC5-RRC message to indicate the above connection failure or connection rejection, and indicate releasing a PC5 unicast link.

For example, the PC5-S signaling indicates releasing a PC5 unicast link, for example, the PC5-S signaling is a disconnect request message.

FIG. 14 is another schematic diagram of the indication method in a sidelink of embodiment 5 of this disclosure. As shown in FIG. 14, for the first terminal equipment, the method includes:
step 1401: transmitting an RRC connection setup request message or an RRC resume request message or an RRC reestablishment request message to a second terminal equipment; and
step 1402: receiving indication information from the second terminal equipment, the indication information being used to indicate that an RRC connection setup procedure or an RRC resume procedure or an RRC reestablishment procedure of the second terminal equipment fails.

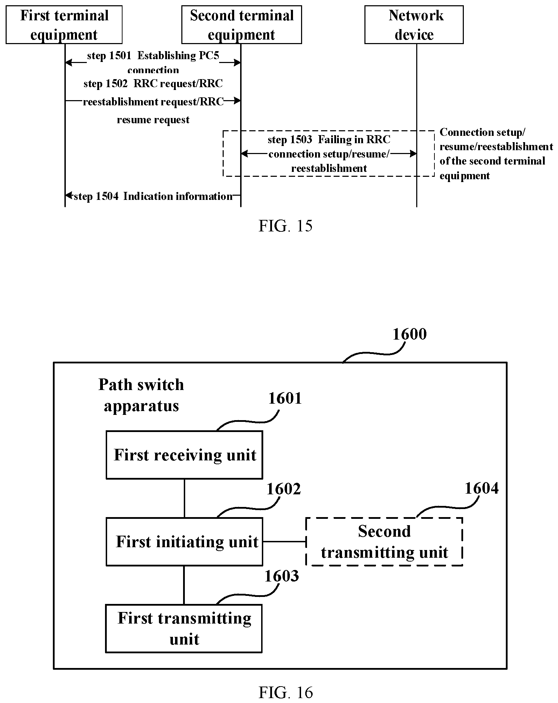

FIG. 15 is a further schematic diagram of the indication method in a sidelink of embodiment 5 of this disclosure. As shown in FIG. 15, for the first terminal equipment and the second terminal equipment, the method includes:
step 1501: establishing PC5 connection by the first terminal equipment with the second terminal equipment;
step 1502: transmitting an RRC connection setup request message or an RRC resume request message or an RRC reestablishment request message by the first terminal equipment to the second terminal equipment;
step 1503: failing in the RRC connection setup procedure or RRC resume procedure or RRC reestablishment procedure of the second terminal equipment; and
step 1504: transmitting indication information by the second terminal equipment to the first terminal equipment.

In the embodiments of this disclosure, the first terminal equipment is a remote UE, and the second terminal equipment is a relay UE.

It can be seen from the above embodiment that in a case where the RRC connection setup procedure or RRC resume procedure or RRC reestablishment procedure fails, the relay UE transmits indication information to the remote UE. Therefore, in a case where the relay UE in the RRC idle state or the RRC inactive state fails in performing the RRC connection setup procedure or RRC resume procedure or RRC reestablishment procedure, the remote UE may be notified or aware of the case, which is conducive to the remote UE in resuming connection with the network in other manners.

### Embodiment 6

The embodiments of this disclosure provides a path switch apparatus, applicable to a second terminal equipment. As a principle of the apparatus for solving problems is identical to that of the method in embodiment 1, reference may be made to the implementation of the method in embodiment 1 for implementation of the apparatus, with identical contents being not going to be repeated herein any further. For example, the apparatus is applicable to the second terminal equipment 102 in FIGs. 2-4.

FIG. 16 is a schematic diagram of the path switch apparatus of embodiment 6 of this disclosure. As shown in FIG. 16, a path switch apparatus 1600 includes:
a first receiving unit 1601 configured to receive an RRC reconfiguration complete (RRCReconfigurationComplete) message from a first terminal equipment;
a first initiating unit 1602 configured to initiate an RRC connection setup procedure or an RRC resume procedure; and
a first transmitting unit 1603 configured to transmit indication information to the first terminal equipment when the RRC connection setup procedure or the RRC resume procedure fails or succeeds.

In the embodiments of this disclosure, the first terminal equipment is a remote UE, and the second terminal equipment is a relay UE.

In the embodiments of this disclosure, when the RRC connection setup procedure or the RRC resume procedure of the second terminal equipment fails, the first transmitting unit 1603 transmits first indication information to the first terminal equipment, the first indication information being used to indicate that the RRC connection setup procedure or the RRC resume procedure of the second terminal equipment fails.

For example, the first indication information is a PC5-RRC message or PC5-S signaling.

For example, the PC5-RRC message indicates connection failure or connection rejection, or releasing a PC5 unicast link, and/or, the PC5-S signaling indicates releasing a PC5 unicast link.

In the embodiments of this disclosure, after the second terminal equipment successfully executes a random access procedure or an RRC connection setup procedure or an RRC resume procedure from the second terminal equipment to a network device, the first transmitting unit 1603 transmits lower layer acknowledgement to the first terminal equipment.

For example, the lower layer is an RLC layer, and the lower layer acknowledgement is acknowledgement of the RLC layer, or the lower layer is an MAC layer, and the lower layer acknowledgement is HARQ feedback of the MAC layer (such as ACK).

In the embodiments of this disclosure, after the second terminal equipment successfully executes a random access procedure or an RRC connection setup procedure or an RRC resume procedure from the second terminal equipment to the network device, the first transmitting unit 1603 transmits a message related to PC5 unicast link setup, such as a direct communication accept message, or a discovery message, etc., to the first terminal equipment.

For example, when an access stratum (AS) of the second terminal equipment successfully executes the random access procedure or the RRC connection setup procedure or the RRC resume procedure from the second terminal equipment to the network device, it may notify a ProSe layer of the second terminal equipment.

In this case, during operations of a new timer like T304, the first terminal equipment may wait for the direct communication accept message or discovery message, etc., transmitted by the second terminal equipment. For example, the access stratum (AS) of the first terminal equipment may notify its ProSe layer of a value of the new timer like T304.

In the embodiments of this disclosure, or, after the second terminal equipment successfully executes the random access procedure or the RRC connection setup procedure or the RRC resume procedure from the second terminal equipment to the network device, the first transmitting unit 1603 transmit an RRC reconfiguration complete sidelink message (RRCReconfigurationCompleteSidelink message) to the first terminal equipment.

In the embodiments of this disclosure, or, after the second terminal equipment successfully executes the random access procedure or the RRC connection setup procedure or the RRC resume procedure from the second terminal equipment to the network device, the first transmitting unit 1603 transmit second indication information to the first terminal equipment.

For example, the second indication information is a PC5-RRC message or PC5-S signaling.

For example, that the second terminal equipment successfully executes the RRC connection setup procedure includes at least one of the following situations that: an RRC setup message is received; a timer T300 is stopped; an RRC setup complete message is submitted to the lower layer for transmission; and a lower layer acknowledgment of the RRC setup complete message from the network device is received.

For example, that the second terminal equipment successfully executes the RRC resume procedure comprises at least one of the following situations that: an RRC resume message is received; an RRC setup message is received; a timer T319 is stopped; an RRC setup complete message or an RRC resume complete message is submitted to the lower layer for transmission; and a lower layer acknowledgment of the RRC setup complete message or RRC resume complete message from the network device is received.

In the embodiments of this disclosure, as shown in FIG. 16, the apparatus may further include:
a second transmitting unit 1604 configured to, when the second terminal equipment executes the RRC connection setup procedure or the RRC resume procedure, indicate to the network device that the RRC connection setup procedure or the RRC resume procedure is used for path switch of the first terminal equipment.

For example, the second transmitting unit 1604 transmits an RRC connection request message or an RRC resume request message to the network device, a cause value included in the RRC connection request message or the RRC resume request message indicating path switch used for the first terminal equipment.

In the embodiments of this disclosure, reference may be made to relevant steps in embodiment 1 for specific functions of the above units, which shall not be repeated herein any further.

It can be seen from the above embodiment that in a case where the RRC connection setup procedure or RRC resume procedure fails or succeeds, the relay UE transmits indication information to the remote UE. Therefore, in a case where the relay UE in the RRC idle state or the RRC inactive state fails or is rejected by the network device in performing the RRC connection setup or RRC resume procedure, the remote UE may be notified or aware of the case, which is conducive to the remote UE in resuming connection with the network in other manners, and reduces service interruption time of path switch of the remote UE.

### Embodiment 7

The embodiments of this disclosure provides a path switch apparatus, applicable to a first terminal equipment. As a principle of the apparatus for solving problems is identical to that of the method in embodiment 2, reference may be made to the implementation of the method in embodiment 2 for implementation of the apparatus, with identical contents being not going to be repeated herein any further. For example, the apparatus is applicable to the first terminal equipment 101 in FIGs. 2-4.

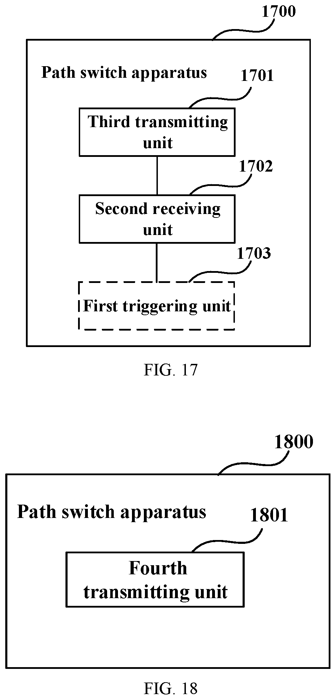

FIG. 17 is a schematic diagram of the path switch apparatus of embodiment 7 of this disclosure. As shown in FIG. 17, a path switch apparatus 1700 includes:
a third transmitting unit 1701 configured to transmit an RRC reconfiguration complete message of the first terminal equipment to a second terminal equipment; and
a second receiving unit 1702 configured to receive indication information from the second terminal equipment, the indication information being used to indicate that an RRC connection setup procedure or an RRC resume procedure of the second terminal equipment fails or succeeds.

In the embodiments of this disclosure, the first terminal equipment is a remote UE, and the second terminal equipment is a relay UE.

In the embodiments of this disclosure, the second receiving unit 1702 may receive first indication information from the second terminal equipment, the first indication information being used to notify that the RRC connection setup procedure or the RRC resume procedure of the second terminal equipment fails.

For example, the first indication information is a PC5-RRC message or PC5-S signaling.

For example, the PC5-RRC message indicates connection failure or connection rejection, or releasing a PC5 unicast link, and/or, the PC5-S signaling indicates releasing a PC5 unicast link.

In the embodiments of this disclosure, as show in FIG. 17, the apparatus may further include:
a first triggering unit 1703 configured to, when the first indication information is received, trigger an RRC connection reestablishment procedure, or a PC5 unicast link release procedure, or a relay selection or reselection procedure, or a path switch failure procedure, or a reconfiguration with sync failure procedure.

For the case where the PC5 unicast link release procedure is triggered upon receiving the first indication information, an access stratum (AS) of the first terminal equipment notifies a ProSe layer to release a PC5 unicast link.

In the embodiments of this disclosure, the second receiving unit 1702 may receive a lower layer acknowledgement from the second terminal equipment, and the path switch procedure of the first terminal equipment is ended.

For example, the lower layer is an RLC layer, and the lower layer acknowledgement is acknowledgement of the RLC layer; or, the lower layer is an MAC layer, and the lower layer acknowledgement is HARQ feedback of the MAC layer (such as ACK).

In the embodiments of this disclosure, the second receiving unit 1702 may receive a message related to PC5 unicast link setup from the second terminal equipment, and the path switch procedure of the first terminal equipment is ended.

In the embodiments of this disclosure, the second receiving unit 1702 may also receive the RRC reconfiguration complete sidelink (RRCReconfigurationCompleteSidelink) message from the second terminal equipment, and the path switch procedure of the first terminal equipment is ended.

In the embodiments of this disclosure, the second receiving unit 1702 may also receive second indication information is received from the second terminal equipment, and the path switch procedure of the first terminal equipment is ended.

For example, the second indication information is a PC5-RRC message or PC5-S signaling.

In the embodiments of this disclosure, reference may be made to relevant contents in embodiment 1 and embodiment 2 for specific contents related to specific functions of the above units, which shall not be repeated herein any further.

It can be seen from the above embodiment that in a case where the RRC connection setup procedure or RRC resume procedure fails or succeeds, the relay UE transmits indication information to the remote UE. Therefore, in a case where the relay UE in the RRC idle state or the RRC inactive state fails or is rejected by the network device in performing the RRC connection setup or RRC resume procedure, the remote UE may be notified or aware of the case, which is conducive to the remote UE in resuming connection with the network in other manners, and reduces service interruption time of path switch of the remote UE.

### Embodiment 8

The embodiments of this disclosure provides a path switch apparatus, applicable to a second terminal equipment and a network device. As a principle of the apparatus for solving problems is identical to that of the method in embodiment 4, reference may be made to the implementation of the method in embodiment 4 for implementation of the apparatus, with identical contents being not going to be repeated herein any further. For example, the apparatus is applicable to the second terminal equipment 102 and the network device 103 in FIGs. 2 and 3, or the second terminal equipment 102 and the network device 103' in FIG 4.

FIG. 18 is a schematic diagram of the path switch apparatus of embodiment 8 of this disclosure. As shown in FIG. 18, a path switch apparatus 1800 includes:
a fourth transmitting unit 1801 configured to, when the second terminal equipment performs an RRC connection setup procedure or an RRC resume procedure, indicate to a network device that the RRC connection setup procedure or the RRC resume procedure is used for path switch of a first terminal equipment.

In the embodiments of this disclosure, the first terminal equipment is a remote UE, and the second terminal equipment is a relay UE.

For example, the fourth transmitting unit 1801 transmits an RRC connection request message or an RRC resume request message to the network device, a cause value included in the RRC connection request message or the RRC resume request message indicating path switch used for the first terminal equipment.

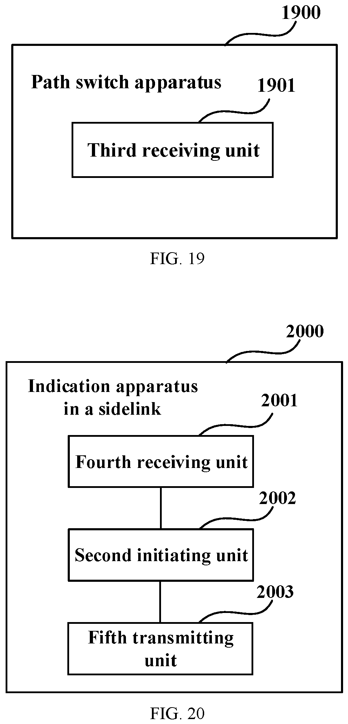

FIG. 19 is another schematic diagram of the path switch apparatus of embodiment 8 of this disclosure. As shown in FIG. 19, at the network device side, the path switch apparatus 1900 includes:
a third receiving unit configured to receive third indication information from the second terminal equipment, the third indication information indicating that an RRC connection setup procedure or an RRC resume procedure of the second terminal equipment is used for path switch of the first terminal equipment.

For example, the third receiving unit receives the RRC connection request message or RRC resume request message from the second terminal equipment, a cause value included in the RRC connection request message or RRC resume request message indicating path switch used for the first terminal equipment.

In the embodiments of this disclosure, reference may be made to relevant contents in embodiment 4 for specific contents related to specific functions of the above units, which shall not be repeated herein any further.

It can be seen from the above embodiment that when the second terminal equipment is performing the RRC connection setup procedure or RRC resume procedure, it indicates that the RRC connection setup or RRC resume procedure is used for path switch of the first terminal equipment, which may prevent the network device from rejecting the RRC connection setup procedure or RRC resume procedure.

### Embodiment 9

The embodiments of this disclosure provides an indication apparatus in a sidelink. The apparatus is applicable to a first terminal equipment and a second terminal equipment. As a principle of the apparatus for solving problems is identical to that of the method in embodiment 5, reference may be made to the implementation of the method in embodiment 5 for implementation of the apparatus, with identical contents being not going to be repeated herein any further. For example, the apparatus is applicable to the first terminal equipment 101 and the second terminal equipment 102 in FIGs. 2-4.

FIG. 20 is a schematic diagram of the indication apparatus in a sidelink of embodiment 9 of this disclosure. As shown in FIG. 20, at the second terminal equipment side, an indication apparatus 2000 in a sidelink includes:
a fourth receiving unit 2001 configured to receive an RRC connection setup request message or an RRC resume request message or an RRC reestablishment request message from the first terminal equipment;
a second initiating unit 2002 configured to initiate an RRC connection setup procedure or an RRC resume procedure or an RRC reestablishment procedure of the second terminal equipment; and
a fifth transmitting unit 2003 configured to transmit indication information to the first terminal equipment in a case where the RRC connection setup procedure or the RRC resume procedure or the RRC reestablishment procedure fails.

In the embodiments of this disclosure, the first terminal equipment is a remote UE, and the second terminal equipment is a relay UE.

For example, the fourth receiving unit 2001 receives the RRC connection setup request message or the RRC resume request message or the RRC reestablishment request message by using specified PC5 RLC channel configuration, or on a specified PC5 RLC channel, or by using SRB0 default or specified configuration or SL-RLC0 configuration, or by using SRB1 default or specified configuration or SL-RLC1 configuration.

For example, the indication information is a PC5-RRC message or PC5-S signaling.

For example, the PC5-RRC message indicates a connection failure or connection rejection, or release of a PC5 unicast link, and/or, the PC5-S signaling indicates releasing a PC5 unicast link.

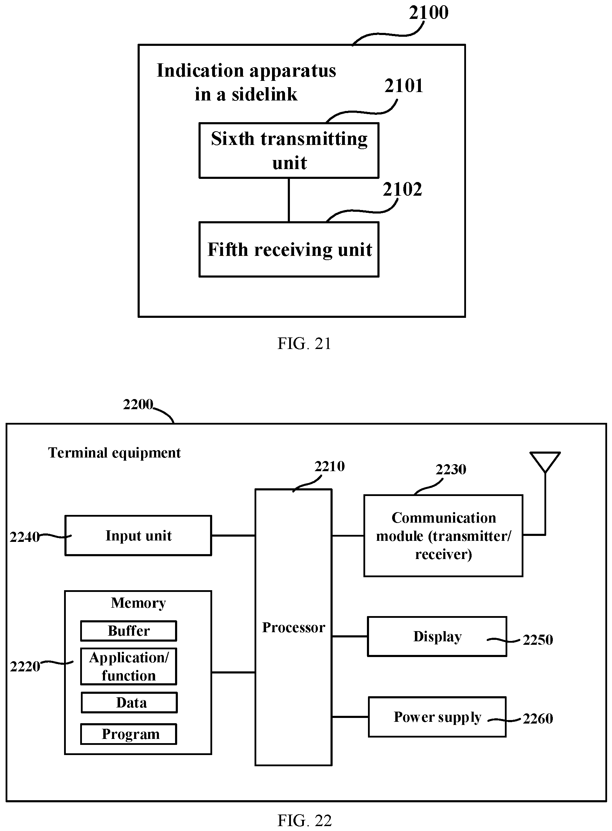

FIG. 21 is another schematic diagram of the indication apparatus in a sidelink of embodiment 9 of this disclosure. As shown in FIG. 21, at the first terminal equipment side, an indication apparatus 2100 in a sidelink includes:
a sixth transmitting unit 2101 configured to transmit an RRC connection setup request message or an RRC resume request message or an RRC reestablishment request message to a second terminal equipment; and
a fifth receiving unit 2102 configured to receive indication information from the second terminal equipment, the indication information being used to indicate that an RRC connection setup procedure or an RRC resume procedure or an RRC reestablishment procedure of the second terminal equipment fails.

For example, the indication information is a PC5-RRC message or PC5-S signaling.

For example, the PC5-RRC message indicates connection failure or connection rejection, or releasing a PC5 unicast link, and/or, the PC5-S signaling indicates releasing a PC5 unicast link.

In the embodiments of this disclosure, reference may be made to relevant contents in embodiment 5 for specific contents related to specific functions of the above units, which shall not be repeated herein any further.

It can be seen from the above embodiment that in a case where the RRC connection setup procedure or RRC resume procedure or RRC reestablishment procedure fails, the relay UE transmits indication information to the remote UE. Therefore, in a case where the relay UE in the RRC idle state or the RRC inactive state fails in performing the RRC connection setup procedure or RRC resume procedure or RRC reestablishment procedure, the remote UE may be notified or aware of the case, which is conducive to the remote UE in resuming connection with the network in other manners.

### Embodiment 10

The embodiments of this disclosure provides a terminal equipment, including the path switch apparatus shown in FIG. 16 or 17 or 18, or including the indication apparatus in a sidelink shown in FIG. 20 or 21.

For example, the terminal equipment is the first terminal equipment 101 or the second terminal equipment 102 in FIGs. 2-4.

FIG. 22 is a block diagram of a systematic structure of the terminal equipment of embodiment 10 of this disclosure. As shown in FIG. 22, a terminal equipment 2200 may include a processor 2210 and a memory 2220, the memory 2220 being coupled to the processor 2210. It should be noted that this figure is illustrative only, and other types of structures may also be used, so as to supplement or replace this structure and achieve a telecommunications function or other functions.

In one implementation, functions of the path switch apparatus or the indication apparatus in a sidelink may be integrated into the processor 2210.

For example, the processor 2210 may be configured to: receive an RRC reconfiguration complete (RRCReconfigurationComplete) message from a first terminal equipment; initiate an RRC connection setup procedure or an RRC resume procedure; and transmit indication information to the first terminal equipment when the RRC connection setup procedure or the RRC resume procedure fails or succeeds.

Or, the processor 2210 may be configured to: transmit an RRC reconfiguration complete message of the first terminal equipment to a second terminal equipment; and receive indication information from the second terminal equipment, the indication information being used to indicate that an RRC connection setup procedure or an RRC resume procedure of the second terminal equipment fails or succeeds.

Or, the processor 2210 may be configured to: when the second terminal equipment performs an RRC connection setup procedure or an RRC resume procedure, indicate to a network device that the RRC connection setup procedure or the RRC resume procedure is used for path switch from a first terminal equipment.

Or, the processor 2210 may be configured to: receive an RRC connection setup request message or an RRC resume request message or an RRC reestablishment request message from a first terminal equipment; initiate an RRC connection setup procedure or an RRC resume procedure or an RRC reestablishment procedure of the second terminal equipment; and transmit indication information to the first terminal equipment in a case where the RRC connection setup procedure or the RRC resume procedure or the RRC reestablishment procedure fails.

Or, the processor 2210 may be configured to: transmit an RRC connection setup request message or an RRC resume request message or an RRC reestablishment request message to a second terminal equipment; and receive indication information from the second terminal equipment, the indication information being used to indicate that an RRC connection setup procedure or an RRC resume procedure or an RRC reestablishment procedure of the second terminal equipment fails.

In another implementation, the path switch apparatus or the indication apparatus in a sidelink and the processor 2210 may be configured separately; for example, the path switch apparatus or the indication apparatus in a sidelink may be configured as a chip connected to the processor 2210, and the functions of the path switch apparatus or the indication apparatus in a sidelink are executed under control of the processor 2210.

As shown in FIG. 22, the terminal equipment 2200 may further include a communication module 2230, an input unit 2240, a display 2250, and a power supply 2260. It should be noted that the terminal equipment 2200 does not necessarily include all the parts shown in FIG. 22, and furthermore, the terminal equipment 2200 may include parts not shown in FIG. 22, and the related art may be referred to.

As shown in FIG. 22, the processor 2210 is sometimes referred to as a controller or an operational control, which may include a microprocessor or other processor devices and/or logic devices. The processor 2210 receives input and controls operations of components of the terminal equipment 2200.

Wherein, the memory 2220 may be, for example, one or more of a buffer memory, a flash memory, a hard drive, a mobile medium, a volatile memory, a nonvolatile memory, or other suitable devices, which may store various data, etc., and furthermore, store programs executing related information. And the processor 2210 may execute programs stored in the memory 2220, so as to realize information storage or processing, etc. Functions of other parts are similar to those of the related art, which shall not be described herein any further. The parts of the terminal equipment 2200 may be realized by specific hardware, firmware, software, or any combination thereof, without departing from the scope of this disclosure.

It can be seen from the above embodiment that in a case where the RRC connection setup procedure or RRC resume procedure fails or succeeds, the relay UE transmits indication information to the remote UE. Therefore, in a case where the relay UE in the RRC idle state or the RRC inactive state fails or is rejected by the network device in performing the RRC connection setup or RRC resume procedure, the remote UE may be notified or aware of the case, which is conducive to the remote UE in resuming connection with the network in other manners, and reduces service interruption time of path switch of the remote UE.

### Embodiment 11

The embodiments of this disclosure provides a network device, including the path switch apparatus shown in FIG. 19.

For example, the network device is the network device 103 or the network device 103' shown in FIGs. 2-4.

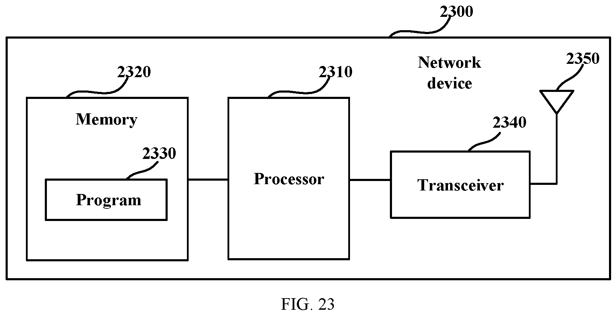

FIG. 23 is a block diagram of a systematic structure of the network device of embodiment 11 of this disclosure. As shown in FIG. 23, a network device 2300 may include a processor 2310 and a memory 2320, the memory 2320 being coupled to the processor 2310. Wherein, the memory 2320 may store various data, and furthermore, it may store a program 2330 for information processing, and execute the program 2330 under control of the processor 2310, so as to receive various information transmitted by a terminal equipment, and transmit various information to the terminal equipment.

In one implementation, the functions of the path switch apparatus may be integrated into the processor 2310. Wherein, the processor 2310 may be configured to: receive third indication information from a second terminal equipment, the third indication information indicating that an RRC connection setup procedure or an RRC resume procedure of the second terminal equipment is used for path switch of a first terminal equipment.

In another implementation, the path switch apparatus and the processor 2310 may be configured separately; for example, the path switch apparatus may be configured as a chip connected to the processor 2310, and the functions of the path switch apparatus are executed under control of the processor 2310.

Furthermore, as shown in FIG. 23, the network device 2300 may include a transceiver 2340, and an antenna 2350, etc. Wherein, functions of the above components are similar to those in the related art, and shall not be described herein any further. It should be noted that the network device 2300 does not necessarily include all the parts shown in FIG. 23, and furthermore, the network device 2300 may include parts not shown in FIG. 23, and the related art may be referred to.

It can be seen from the above embodiment that when the second terminal equipment is performing the RRC connection setup procedure or RRC resume procedure, it indicates to the network device that the RRC connection setup or RRC resume procedure is used for path switch of the first terminal equipment, which may prevent the network device from rejecting the RRC connection setup procedure or RRC resume procedure.

### Embodiment 12

The embodiments of this disclosure provides a communication system, including the terminal equipment described in embodiment 10 and/or the network device described in embodiment 11, and reference may be made to the disclosure contained in embodiments 10 and 11 for details.

For example, reference may be made to FIGs. 2-4 for a structure of the communication system. The communication system includes the first terminal equipment 101, the second terminal equipment 102 and the network device 103, or, the communication system includes a first terminal equipment, the second terminal equipment 102 and network devices 103 and 103', and reference may be made to the disclosure contained in embodiments 1-11, with repeated parts being not going to be described herein any further.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIG. 16 may either correspond to software modules of procedures of a computer program, or correspond to hardware modules. Such software modules may respectively correspond to the steps shown in FIG. 5 or 6. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIG. FIG. 16 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIG. 16 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

As to implementations containing the above embodiments, following supplements are further disclosed.

### Supplement I

1. A path switch apparatus, applicable to a second terminal equipment, the apparatus including:
   a first receiving unit configured to receive an RRC reconfiguration complete (RRCReconfigurationComplete) message from a first terminal equipment;
   a first initiating unit configured to initiate an RRC connection setup procedure or an RRC resume procedure; and
   a first transmitting unit configured to transmit indication information to the first terminal equipment when the RRC connection setup procedure or the RRC resume procedure fails or succeeds.
2. The apparatus according to supplement 1, wherein,
   when the RRC connection setup procedure or the RRC resume procedure of the second terminal equipment fails, the second transmitting unit transmits first indication information to the first terminal equipment, the first indication information being used to indicate that the RRC connection setup procedure or the RRC resume procedure of the second terminal equipment fails.
3. The apparatus according to supplement 2, wherein,
   the first indication information is a PC5-RRC message or PC5-S signaling.
4. The apparatus according to supplement 3, wherein,
   the PC5-RRC message indicates connection failure or connection rejection, or releasing a PC5 unicast link,
      and/or,
   the PC5-S signaling indicates releasing a PC5 unicast link.
5. The apparatus according to supplement 1, wherein,
   after the second terminal equipment successfully executes a random access procedure or an RRC connection setup procedure or an RRC resume procedure from the second terminal equipment to a network device, the first transmitting unit transmits lower layer acknowledgement to the first terminal equipment.
6. The apparatus according to supplement 5, wherein,
   the lower layer is an RLC layer or an MAC layer.
7. The apparatus according to supplement 1, wherein,
   after the second terminal equipment successfully executes a random access procedure or an RRC connection setup procedure or an RRC resume procedure from the second terminal equipment to the network device, the first transmitting unit transmits a message related to PC5 unicast link setup to the first terminal equipment.
8. The apparatus according to supplement 7, wherein,
   when an access stratum (AS) of the second terminal equipment successfully executes the random access procedure or the RRC connection setup procedure or the RRC resume procedure from the second terminal equipment to the network device, it notifies a ProSe layer of the second terminal equipment.
9. The apparatus according to supplement 1, wherein,
   after the second terminal equipment successfully executes the random access procedure or the RRC connection setup procedure or the RRC resume procedure from the second terminal equipment to the network device, the first transmitting unit transmit an RRC reconfiguration complete sidelink message (RRCReconfigurationCompleteSidelink message) to the first terminal equipment.
10. The apparatus according to supplement 1, wherein,
   after the second terminal equipment successfully executes the random access procedure or the RRC connection setup procedure or the RRC resume procedure from the second terminal equipment to the network device, the first transmitting unit transmit second indication information to the first terminal equipment.
11. The apparatus according to supplement 10, wherein,
   the second indication information is a PC5-RRC message or PC5-S signaling.
12. The apparatus according to any one of supplements 5-11, wherein,
   that the second terminal equipment successfully executes the RRC connection setup procedure includes at least one of the following situations that:
   an RRC setup message is received;
   a timer T300 is stopped;
   an RRC setup complete message is submitted to the lower layer for transmission; and
   a lower layer acknowledgment of the RRC setup complete message from the network device is received.
13. The apparatus according to any one of supplements 5-11, wherein,
   that the second terminal equipment successfully executes the RRC resume procedure includes at least one of the following situations that:
   an RRC resume message is received;
   an RRC setup message is received;
   a timer T319 is stopped;
   an RRC setup complete message or an RRC resume complete message is submitted to the lower layer for transmission; and
   a lower layer acknowledgment of the RRC setup complete message or RRC resume complete message from the network device is received.
14. The apparatus according to any one of supplements 1-13, wherein the apparatus further includes:
   a second transmitting unit configured to, when the second terminal equipment executes the RRC connection setup procedure or the RRC resume procedure, indicate to the network device that the RRC connection setup procedure or the RRC resume procedure is used for path switch of the first terminal equipment.
15. The apparatus according to supplement 14, wherein,
   the second transmitting unit transmits an RRC connection request message or an RRC resume request message to the network device, a cause value included in the RRC connection request message or the RRC resume request message indicating path switch used for the first terminal equipment.
16. A path switch apparatus, applicable to a first terminal equipment, the apparatus including:
   a third transmitting unit configured to transmit an RRC reconfiguration complete message of the first terminal equipment to a second terminal equipment; and
   a second receiving unit configured to receive indication information from the second terminal equipment, the indication information being used to indicate that an RRC connection setup procedure or an RRC resume procedure of the second terminal equipment fails or succeeds.
17. The apparatus according to supplement 16, wherein,
   the second receiving unit receives first indication information from the second terminal equipment, the first indication information being used to notify that the RRC connection setup procedure or the RRC resume procedure of the second terminal equipment fails.
18. The apparatus according to supplement 17, wherein,
   the first indication information is a PC5-RRC message or PC5-S signaling.
19. The apparatus according to supplement 18, wherein,
   the PC5-RRC message indicates connection failure or connection rejection, or releasing a PC5 unicast link,
      and/or,
   the PC5-S signaling indicates releasing a PC5 unicast link.
20. The apparatus according to any one of supplements 17-19, wherein the apparatus further includes:
   a first triggering unit configured to, when the first indication information is received, trigger an RRC connection reestablishment procedure, or a PC5 unicast link release procedure, or a relay selection or reselection procedure, or a path switch failure procedure, or a reconfiguration with sync failure procedure.
21. The apparatus according to supplement 20, wherein,
   for the case where the PC5 unicast link release procedure is triggered upon receiving the first indication information, an access stratum (AS) of the first terminal equipment notifies a ProSe layer to release a PC5 unicast link.
22. The apparatus according to supplement 16, wherein,
   the second receiving unit receives a lower layer acknowledgement from the second terminal equipment, and a path switch procedure of the first terminal equipment is ended.
23. The apparatus according to supplement 22, wherein,
   the lower layer is an RLC layer or an MAC layer.
24. The apparatus according to supplement 16, wherein,
   the second receiving unit receives a message related to PC5 unicast link setup from the second terminal equipment, and a path switch procedure of the first terminal equipment is ended.
25. The apparatus according to supplement 16, wherein,
   the second receiving unit receives an RRC reconfiguration complete sidelink (RRCReconfigurationCompleteSidelink) message from the second terminal equipment, and a path switch procedure of the first terminal equipment is ended.
26. The apparatus according to supplement 16, wherein,
   the second receiving unit receives second indication information from the second terminal equipment, and a path switch procedure of the first terminal equipment is ended.
27. The apparatus according to supplement 25, wherein,
   the second indication information is a PC5-RRC message or PC5-S signaling.
28. A path switch apparatus, applicable to a second terminal equipment, the apparatus including:
   a fourth transmitting unit configured to, when the second terminal equipment performs an RRC connection setup procedure or an RRC resume procedure, indicate to a network device that the RRC connection setup procedure or the RRC resume procedure is used for path switch of a first terminal equipment.
29. The apparatus according to supplement 28, wherein,
   the fourth transmitting unit transmits an RRC connection request message or an RRC resume request message to the network device, a cause value included in the RRC connection request message or the RRC resume request message indicating path switch used for the first terminal equipment.
30. A path switch apparatus, applicable to a network device, the apparatus including:
   a third receiving unit configured to receive third indication information from the second terminal equipment, the third indication information indicating that an RRC connection setup procedure or an RRC resume procedure of the second terminal equipment is used for path switch of the first terminal equipment.
31. The apparatus according to supplement 30, wherein,
   the third receiving unit receives the RRC connection request message or RRC resume request message from the second terminal equipment, a cause value included in the RRC connection request message or RRC resume request message indicating path switch used for the first terminal equipment.
32. An indication apparatus in a sidelink, applicable to a second terminal equipment, the apparatus including:
   a fourth receiving unit configured to receive an RRC connection setup request message or an RRC resume request message or an RRC reestablishment request message from a first terminal equipment;
   a second initiating unit configured to initiate an RRC connection setup procedure or an RRC resume procedure or an RRC reestablishment procedure of the second terminal equipment; and
   a fifth transmitting unit configured to transmit indication information to the first terminal equipment in a case where the RRC connection setup procedure or the RRC resume procedure or the RRC reestablishment procedure fails.
33. The apparatus according to supplement 32, wherein,
   the fourth receiving unit receives the RRC connection setup request message or the RRC resume request message or the RRC reestablishment request message by using specified PC5 RLC channel configuration, or on a specified PC5 RLC channel, or by using SRB0 default or specified configuration or SL-RLC0 configuration, or by using SRB1 default or specified configuration or SL-RLC1 configuration.
34. The apparatus according to supplement 31 or 32, wherein,
   the indication information is a PC5-RRC message or PC5-S signaling.
35. The apparatus according to supplement 34, wherein,
   the PC5-RRC message indicates a connection failure or connection rejection, or release of a PC5 unicast link,
      and/or,
   the PC5-S signaling indicates releasing a PC5 unicast link.
36. An indication apparatus in a sidelink, applicable to a first terminal equipment, the apparatus including:
   a sixth transmitting unit configured to transmit an RRC connection setup request message or an RRC resume request message or an RRC reestablishment request message to a second terminal equipment; and
   a fifth receiving unit configured to receive indication information from the second terminal equipment, the indication information being used to indicate that an RRC connection setup procedure or an RRC resume procedure or an RRC reestablishment procedure of the second terminal equipment fails.
37. The apparatus according to supplement 36, wherein,
   the indication information is a PC5-RRC message or PC5-S signaling.
38. The apparatus according to supplement 37, wherein,
   the PC5-RRC message indicates connection failure or connection rejection, or releasing a PC5 unicast link,
      and/or,
   the PC5-S signaling indicates releasing a PC5 unicast link.
39. A terminal equipment, including the apparatus as described in any one of supplements 1-15.
40. A terminal equipment, including the apparatus as described in any one of supplements 16-27.
41. A terminal equipment, including the apparatus as described in supplement 28 or 29.
42. A network device, including the apparatus as described in supplement 30 or 31.
43. A terminal equipment, including the apparatus as described in any one of supplements 32-35.
44. A terminal equipment, including the apparatus as described in any one of supplements 36-38.
45. A communication system, including the terminal equipment as described in supplement 39 and/or the terminal equipment as described in supplement 40.
46. A communication system, including the terminal equipment as described in supplement 41 and/or the network device as described in supplement 42.
47. A communication system, including the terminal equipment as described in supplement 43 and/or the terminal equipment as described in supplement 44, and a network device.

### Supplement II

1. A path switch method, applicable to a second terminal equipment, the method including:
   receiving an RRC reconfiguration complete (RRCReconfigurationComplete) message from a first terminal equipment;
   initiating an RRC connection setup procedure or an RRC resume procedure; and
   transmitting indication information to the first terminal equipment when the RRC connection setup procedure or the RRC resume procedure fails or succeeds.
2. The method according to supplement 1, wherein the transmitting indication information to the first terminal equipment when the RRC connection setup procedure or the RRC resume procedure fails or succeeds includes that:
   when the RRC connection setup procedure or the RRC resume procedure of the second terminal equipment fails, the second transmitting unit transmits first indication information to the first terminal equipment, the first indication information being used to indicate that the RRC connection setup procedure or the RRC resume procedure of the second terminal equipment fails.
3. The method according to supplement 2, wherein,
   the first indication information is a PC5-RRC message or PC5-S signaling.
4. The method according to supplement 3, wherein,
   the PC5-RRC message indicates connection failure or connection rejection, or releasing a PC5 unicast link,
      and/or,
   the PC5-S signaling indicates releasing a PC5 unicast link.
5. The method according to supplement 1, wherein the transmitting indication information to the first terminal equipment when the RRC connection setup procedure or the RRC resume procedure fails or succeeds includes:
   after the second terminal equipment successfully executes a random access procedure or an RRC connection setup procedure or an RRC resume procedure from the second terminal equipment to a network device, transmitting lower layer acknowledgement to the first terminal equipment.
6. The method according to supplement 5, wherein,
   the lower layer is an RLC layer or an MAC layer.
7. The method according to supplement 1, wherein the transmitting indication information to the first terminal equipment when the RRC connection setup procedure or the RRC resume procedure fails or succeeds includes:
   after the second terminal equipment successfully executes a random access procedure or an RRC connection setup procedure or an RRC resume procedure from the second terminal equipment to the network device, transmitting a message related to PC5 unicast link setup to the first terminal equipment.
8. The method according to supplement 7, wherein the method further includes:
   when an access stratum (AS) of the second terminal equipment successfully executes the random access procedure or the RRC connection setup procedure or the RRC resume procedure from the second terminal equipment to the network device, notifying a ProSe layer of the second terminal equipment.
9. The method according to supplement 1, wherein the transmitting indication information to the first terminal equipment when the RRC connection setup procedure or the RRC resume procedure fails or succeeds includes:
   after the second terminal equipment successfully executes the random access procedure or the RRC connection setup procedure or the RRC resume procedure from the second terminal equipment to the network device, transmitting an RRC reconfiguration complete sidelink message (RRCReconfigurationCompleteSidelink message) to the first terminal equipment.
10. The method according to supplement 1, wherein the transmitting indication information to the first terminal equipment when the RRC connection setup procedure or the RRC resume procedure fails or succeeds includes:
   after the second terminal equipment successfully executes the random access procedure or the RRC connection setup procedure or the RRC resume procedure from the second terminal equipment to the network device, transmitting unit second indication information to the first terminal equipment.
11. The method according to supplement 10, wherein,
   the second indication information is a PC5-RRC message or PC5-S signaling.
12. The method according to any one of supplements 5-11, wherein,
   that the second terminal equipment successfully executes the RRC connection setup procedure includes at least one of the following situations that:
   an RRC setup message is received;
   a timer T300 is stopped;
   an RRC setup complete message is submitted to the lower layer for transmission; and
   a lower layer acknowledgment of the RRC setup complete message from the network device is received.
13. The method according to any one of supplements 5-11, wherein,
   that the second terminal equipment successfully executes the RRC resume procedure includes at least one of the following situations that:
   an RRC resume message is received;
   an RRC setup message is received;
   a timer T319 is stopped;
   an RRC setup complete message or an RRC resume complete message is submitted to the lower layer for transmission; and
   a lower layer acknowledgment of the RRC setup complete message or RRC resume complete message from the network device is received.
14. The method according to any one of supplements 1-13, wherein the method further includes:
   when the second terminal equipment executes the RRC connection setup procedure or the RRC resume procedure, indicating to the network device that the RRC connection setup procedure or the RRC resume procedure is used for path switch of the first terminal equipment.
15. The method according to supplement 14, wherein the when the second terminal equipment executes the RRC connection setup procedure or the RRC resume procedure, indicating to the network device that the RRC connection setup procedure or the RRC resume procedure is used for path switch of the first terminal equipment, includes that:
   the second transmitting unit transmits an RRC connection request message or an RRC resume request message to the network device, a cause value included in the RRC connection request message or the RRC resume request message indicating path switch used for the first terminal equipment.
16. A path switch method, applicable to a first terminal equipment, the method including:
   transmitting an RRC reconfiguration complete message of the first terminal equipment to a second terminal equipment; and
   receiving indication information from the second terminal equipment, the indication information being used to indicate that an RRC connection setup procedure or an RRC resume procedure of the second terminal equipment fails or succeeds.
17. The method according to supplement 16, wherein the receiving indication information from the second terminal equipment includes:
   receiving first indication information from the second terminal equipment, the first indication information being used to notify that the RRC connection setup procedure or the RRC resume procedure of the second terminal equipment fails.
18. The method according to supplement 17, wherein,
   the first indication information is a PC5-RRC message or PC5-S signaling.
19. The method according to supplement 18, wherein,
   the PC5-RRC message indicates connection failure or connection rejection, or releasing a PC5 unicast link,
      and/or,
   the PC5-S signaling indicates releasing a PC5 unicast link.
20. The method according to any one of supplements 17-19, wherein the method further includes:
   when the first indication information is received, triggering an RRC connection reestablishment procedure, or a PC5 unicast link release procedure, or a relay selection or reselection procedure, or a path switch failure procedure, or a reconfiguration with sync failure procedure.
21. The method according to supplement 20, wherein,
   for the case where the PC5 unicast link release procedure is triggered upon receiving the first indication information, an access stratum (AS) of the first terminal equipment notifies a ProSe layer to release a PC5 unicast link.
22. The method according to supplement 16, wherein the receiving indication information from the second terminal equipment includes:
   receiving a lower layer acknowledgement from the second terminal equipment, and a path switch procedure of the first terminal equipment being ended.
23. The method according to supplement 22, wherein,
   the lower layer is an RLC layer or an MAC layer.
24. The method according to supplement 16, wherein the receiving indication information from the second terminal equipment includes:
   receiving a message related to PC5 unicast link setup from the second terminal equipment, and a path switch procedure of the first terminal equipment being ended.
25. The method according to supplement 16, wherein the receiving indication information from the second terminal equipment includes:
   receiving an RRC reconfiguration complete sidelink RRCReconfigurationCompleteSidelink) message from the second terminal equipment, and a path switch procedure of the first terminal equipment being ended.
26. The method according to supplement 16, wherein the receiving indication information from the second terminal equipment includes:
   receiving second indication information from the second terminal equipment, and a path switch procedure of the first terminal equipment being ended.
27. The method according to supplement 25, wherein,
   the second indication information is a PC5-RRC message or PC5-S signaling.
28. A path switch method, applicable to a second terminal equipment, the method including:
   when the second terminal equipment performs an RRC connection setup procedure or an RRC resume procedure, indicating to a network device that the RRC connection setup procedure or the RRC resume procedure is used for path switch of a first terminal equipment.
29. The method according to supplement 28, wherein the when the second terminal equipment performs an RRC connection setup procedure or an RRC resume procedure, indicating to a network device that the RRC connection setup procedure or the RRC resume procedure is used for path switch of a first terminal equipment, includes:
   transmitting an RRC connection request message or an RRC resume request message to the network device, a cause value included in the RRC connection request message or the RRC resume request message indicating path switch used for the first terminal equipment.
30. A path switch method, applicable to a network device, the method including:
   receiving third indication information from the second terminal equipment, the third indication information indicating that an RRC connection setup procedure or an RRC resume procedure of the second terminal equipment is used for path switch of the first terminal equipment.
31. The method according to supplement 30, wherein the receiving third indication information from the second terminal equipment, the third indication information indicating that an RRC connection setup procedure or an RRC resume procedure of the second terminal equipment is used for path switch of the first terminal equipment, includes:
   receiving the RRC connection request message or RRC resume request message from the second terminal equipment, a cause value included in the RRC connection request message or RRC resume request message indicating path switch used for the first terminal equipment.
32. An indication method in a sidelink, applicable to a second terminal equipment, the method including:
   receiving an RRC connection setup request message or an RRC resume request message or an RRC reestablishment request message from a first terminal equipment;
   initiating an RRC connection setup procedure or an RRC resume procedure or an RRC reestablishment procedure of the second terminal equipment; and
   transmitting indication information to the first terminal equipment in a case where the RRC connection setup procedure or the RRC resume procedure or the RRC reestablishment procedure fails.
33. The method according to supplement 32, wherein the receiving an RRC connection setup request message or an RRC resume request message or an RRC reestablishment request message from a first terminal equipment includes:
   receiving the RRC connection setup request message or the RRC resume request message or the RRC reestablishment request message by using specified PC5 RLC channel configuration, or on a specified PC5 RLC channel, or by using SRB0 default or specified configuration or SL-RLC0 configuration, or by using SRB1 default or specified configuration or SL-RLC1 configuration.
34. The method according to supplement 31 or 32, wherein,
   the indication information is a PC5-RRC message or PC5-S signaling.
35. The method according to supplement 34, wherein,
   the PC5-RRC message indicates a connection failure or connection rejection, or release of a PC5 unicast link,
      and/or,
   the PC5-S signaling indicates releasing a PC5 unicast link.
36. An indication method in a sidelink, applicable to a first terminal equipment, the method including:
   transmitting an RRC connection setup request message or an RRC resume request message or an RRC reestablishment request message to a second terminal equipment; and
   receiving indication information from the second terminal equipment, the indication information being used to indicate that an RRC connection setup procedure or an RRC resume procedure or an RRC reestablishment procedure of the second terminal equipment fails.
37. The method according to supplement 36, wherein,
   the indication information is a PC5-RRC message or PC5-S signaling.
38. The method according to supplement 37, wherein,
   the PC5-RRC message indicates connection failure or connection rejection, or releasing a PC5 unicast link,
      and/or,
   the PC5-S signaling indicates releasing a PC5 unicast link.

## Claims

1. A path switch apparatus, applicable to a second terminal equipment, the apparatus comprising:
a first receiving unit configured to receive an RRC reconfiguration complete (RRCReconfigurationComplete) message from a first terminal equipment;
a first initiating unit configured to initiate an RRC connection setup procedure or an RRC resume procedure; and
a first transmitting unit configured to transmit indication information to the first terminal equipment when the RRC connection setup procedure or the RRC resume procedure fails or succeeds.

2. The apparatus according to claim 1, wherein,
when the RRC connection setup procedure or the RRC resume procedure of the second terminal equipment fails, the first transmitting unit transmit first indication information to the first terminal equipment, the first indication information being used to indicate that the RRC connection setup procedure or the RRC resume procedure of the second terminal equipment fails.

3. The apparatus according to claim 2, wherein,
the first indication information is a PC5-RRC message or PC5-S signaling.

4. The apparatus according to claim 3, wherein,
the PC5-RRC message indicates connection failure or connection rejection, or releases a PC5 unicast link,
and/or,
the PC5-S signaling indicates releasing a PC5 unicast link.

5. The apparatus according to claim 1, wherein,
after the second terminal equipment successfully executes a random access procedure or an RRC connection setup procedure or an RRC resume procedure from the second terminal equipment to a network device, the first transmitting unit transmits lower layer acknowledgement to the first terminal equipment.

6. The apparatus according to claim 5, wherein,
the lower layer is the an RLC layer or an MAC layer.

7. The apparatus according to claim 1, wherein,
after the second terminal equipment successfully executes a random access procedure or an RRC connection setup procedure or an RRC resume procedure from the second terminal equipment to the network device, the first transmitting unit transmits a message related to PC5 unicast link setup to the first terminal equipment.

8. The apparatus according to claim 7, wherein,
when an access stratum (AS) of the second terminal equipment successfully executes the random access procedure or the RRC connection setup procedure or the RRC resume procedure from the second terminal equipment to the network device, it notifies a ProSe layer of the second terminal equipment.

9. The apparatus according to claim 1, wherein,
after the second terminal equipment successfully executes the random access procedure or the RRC connection setup procedure or the RRC resume procedure from the second terminal equipment to the network device, the first transmitting unit transmit an RRC reconfiguration complete sidelink message (RRCReconfigurationCompleteSidelink message) to the first terminal equipment.

10. The apparatus according to claim 1, wherein,
after the second terminal equipment successfully executes the random access procedure or the RRC connection setup procedure or the RRC resume procedure from the second terminal equipment to the network device, the first transmitting unit transmit second indication information to the first terminal equipment.

11. The apparatus according to claim 10, wherein,
the second indication information is a PC5-RRC message or PC5-S signaling.

12. The apparatus according to claim 5, wherein,
that the second terminal equipment successfully executes the RRC connection setup procedure comprises at least one of the following situations that:
an RRC setup message is received;
a timer T300 is stopped;
an RRC setup complete message is submitted to the lower layer for transmission;
and
a lower layer acknowledgment of the RRC setup complete message from the network device is received.

13. The apparatus according to claim 5, wherein,
that the second terminal equipment successfully executes the RRC resume procedure comprises at least one of the following situations that:
an RRC resume message is received;
an RRC setup message is received;
a timer T319 is stopped;
an RRC setup complete message or an RRC resume complete message is submitted to the lower layer for transmission; and
a lower layer acknowledgment of the RRC setup complete message or RRC resume complete message from the network device is received.

14. The apparatus according to claim 1, wherein the apparatus further comprises:
a second transmitting unit configured to, when the second terminal equipment executes the RRC connection setup procedure or the RRC resume procedure, indicate to the network device that the RRC connection setup procedure or the RRC resume procedure is used for path switch of the first terminal equipment.

15. The apparatus according to claim 14, wherein,
the second transmitting unit transmits an RRC connection request message or an RRC resume request message to the network device, a cause value comprised in the RRC connection request message or the RRC resume request message indicating used for path switch of the first terminal equipment.

16. A path switch apparatus, applicable to a first terminal equipment, the apparatus comprising:
a third transmitting unit configured to transmit an RRC reconfiguration complete message of the first terminal equipment to a second terminal equipment; and
a second receiving unit configured to receive indication information from the second terminal equipment, the indication information being used to indicate that an RRC connection setup procedure or an RRC resume procedure of the second terminal equipment fails or succeeds.

17. The apparatus according to claim 16, wherein,
the second receiving unit receives first indication information from the second terminal equipment, the first indication information being used to notify that the RRC connection setup procedure or the RRC resume procedure of the second terminal equipment fails.

18. The apparatus according to claim 17, wherein,
the first indication information is a PC5-RRC message or PC5-S signaling.

19. A path switch apparatus, applicable to a network device, the apparatus comprising:
a third receiving unit configured to receive third indication information from a second terminal equipment, the third indication information indicating that an RRC connection setup procedure or an RRC resume procedure of the second terminal equipment is used for path switch of the first terminal equipment.

20. The apparatus according to claim 19, wherein,
the third receiving unit receives an RRC connection request message or an RRC resume request message from the second terminal equipment, a cause value included in the RRC connection request message or the RRC resume request message indicating used for path switch of the first terminal equipment.
